(19) Europäisches Patentamt / European Patent Office / Office européen des brevets

(11) **EP 4 644 479 A1**

(12) **EUROPEAN PATENT APPLICATION**

(43) Date of publication:
**05.11.2025 Bulletin 2025/45**

(21) Application number: **24173132.2**

(22) Date of filing: **29.04.2024**

(51) International Patent Classification (IPC):
***C08L 23/10*** *(2006.01)*

(52) Cooperative Patent Classification (CPC):
(C-Sets available)
C08K 2003/265; C08L 2207/20          (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **ALBUNIA, Alexandra Romina**
**4021 Linz (AT)**

• **DUSCHER, Bernadette**
**4021 Linz (AT)**
• **KAYNAK, Baris**
**4021 Linz (AT)**
• **DENIFL, Peter**
**4021 Linz (AT)**
• **BAUMANN, Paul**
**4021 Linz (AT)**
• **NUNEZ, Manuel**
**06101 Porvoo (FI)**
• **SALABERGER, Dietmar**
**4021 Linz (AT)**

(74) Representative: **Kador & Partner Part mbB**
**Corneliusstraße 15**
**80469 München (DE)**

(54) **MIXED-PLASTIC POLYPROPYLENE RECYCLING BLEND OF HIGH PURITY**

(57)    The present invention relates to a mixed-plastic polypropylene recycling blend having i) a polypropylene content of at least 92 wt.-%, relative to the total weight of the mixed-plastic polypropylene recycling blend and determined by Fourier-transform infrared (FTIR) spectroscopy as described in the specification; ii) a melt flow rate $MFR_2$ in the range of from 3 to 10 g/10 min, determined according to ISO 1133, 230 °C, 2.16 kg; iii) a content of inclusions of a density of at least 1.1 g/cm$^3$ of up to 0.45 vol.-%, wherein the content of inclusions of a density of at least 1.1 g/cm$^3$ and equal to or lower than 1.53 g/cm$^3$ is in the range of from 0.01 to less than 0.40 vol.-%, the contents of inclusions being indicated relative to the total volume of the mixed-plastic polypropylene recycling blend and determined by X-ray Computed Tomography (X-ray CT) as described in the specification; iv) a flexural modulus in the range of from 1050 to 1350 MPa, determined as described in the specification; v) a sum of contents of contaminants selected from polyamide, polystyrene and chalk of less than 1.0 wt.-%, relative to the total weight of the mixed-plastic polypropylene recycling blend and determined by Fourier-transform infrared (FTIR) spectroscopy as described in the specification; and vi) a content of soluble fraction (SF) in the range of from 3.0 to 12.0 wt.-%, relative to the total weight of the mixed-plastic polypropylene recycling blend, wherein the soluble fraction (SF) has an intrinsic viscosity (IV(SF)) of below 1.1 dl/g, the content of the soluble fraction (SF) and the intrinsic viscosity (IV(SF)) being determined by CRYSTEX QC analysis as described in the specification. The present invention also relates to an article comprising the mixed-plastic polypropylene recycling blend recited above, as well as to the use of the mixed-plastic polypropylene recycling blend for packaging applications.

EP 4 644 479 A1

(52) Cooperative Patent Classification (CPC): (Cont.)

C-Sets
**C08L 23/10, C08L 23/04;**
**C08L 23/10, C08L 23/04, C08K 3/26**

**Description**

The present invention relates to a mixed-plastic polypropylene recycling blend characterized by high purity and beneficial physical properties.

**Background**

During the last decades, concern about plastics and the environmental sustainability of their use in current quantities has grown. Polymers, in particular polyethylene and polypropylene, are increasingly consumed in large amounts in a wide range of applications, including packaging for food and other goods, fibers, automotive components, and a great variety of manufactured articles. This has led to new legislation on disposal, collection and recycling of polymers. There have been efforts in several countries to increase the percentage of plastic materials being recycled instead of being sent to landfill.

Flexible polyolefin articles, and therefore waste comprising these articles, are in general heavily printed, often metallized, large in surface area, and in contact with biological contaminations. These attributes result in a high contamination level, dark color, odor and emissions, which challenge mechanical recycling. Further, flexible polyolefin article feedstocks have a very heterogeneous composition. Thus, even with advanced sorting and washing technologies when recycling such feedstocks, impurities and residual inclusions can still remain at very high levels.

Accordingly, removal of contaminants from flexible polyolefin article feedstocks generates problems in mechanical recycling. Therefore, the majority of recycling processes focuses on recycling of rigid polyolefin articles. In case flexible material is contained as contaminant in the rigid polyolefin article streams of a mechanical recycling process, this material is often sorted out from the rigid polyolefin article streams and not included in the process. For example, international applications WO 2023/118421 A1 and WO 2023/180222 A1 describe processes, wherein a light fraction typically containing labels and other non-polyolefin materials is separated from the recycling stream and not subjected to the further steps of the recycling process.

However, the attention for recycling of flexible polyolefin articles increases, and, for example, WO 2023/209075 A1 describes a recycling process that includes sorting the transparent fraction from post-consumer waste and preparing a polypropylene recyclate with a low content of contaminants. This process comprises a quality control step based on the analysis of the ethylene-propylene rubber (EPR) fraction of the soluble fraction, which has proven less convenient for application in high-load industrial recycling processes.

Accordingly, there is a need for recycling processes for flexible polyolefin articles and respectively recycled flexible polyolefin materials. For the further use of these materials, it is important that they are of high purity and good mechanical properties.

**Summary of the Invention**

The present invention addresses the above-stated need and provides a mixed-plastic polypropylene recycling blend having

i) a polypropylene content of at least 92 wt.-%, relative to the total weight of the mixed-plastic polypropylene recycling blend and determined by Fourier-transform infrared (FTIR) spectroscopy as described herein below;

ii) a melt flow rate $MFR_2$ in the range of from 3 to 10 g/10 min, determined according to ISO 1133, 230 °C, 2.16 kg;

iii) a content of inclusions of a density of at least 1.1 g/cm³ of up to 0.45 vol.-%, wherein the content of inclusions of a density of at least 1.1 g/cm³ and equal to or lower than 1.53 g/cm³ is in the range of from 0.01 to less than 0.40 vol.-%, the contents of inclusions being indicated relative to the total volume of the mixed-plastic polypropylene recycling blend and determined by X-ray Computed Tomography (X-ray CT) as described herein below;

iv) a flexural modulus in the range of from 1050 to 1350 MPa, determined as described herein below;

v) a sum of contents of contaminants selected from polyamide, polystyrene and chalk of less than 1.0 wt.-%, relative to the total weight of the mixed-plastic polypropylene recycling blend and determined by Fourier-transform infrared (FTIR) spectroscopy as described herein below; and

vi) a content of soluble fraction (SF) in the range of from 3.0 to 12.0 wt.-%, relative to the total weight of the mixed-plastic polypropylene recycling blend, wherein the soluble fraction (SF) has an intrinsic viscosity (IV(SF)) of below 1.1 dl/g, the content of the soluble fraction (SF) and the intrinsic viscosity (IV(SF)) being determined by CRYSTEX QC analysis as described herein below.

The present invention also provides an article comprising the mixed-plastic polypropylene recycling blend recited above, as well as the use of the mixed-plastic polypropylene recycling blend for packaging applications.

The present invention is based on the observation that the mixed-plastic polypropylene recycling blend having the recited beneficial properties can be obtained by a particularly designed recycling process. Due to its low content of contaminants as well as its good rheological and physical properties, the mixed-plastic polypropylene recycling blend according to the present invention can be used in a huge number of different applications.

**Description of the Invention**

*Mixed-plastic polypropylene recycling blend*

The present invention is directed to a mixed-plastic polypropylene recycling blend.

As used herein, "*mixed plastic*" denotes plastic objects originating from plastic waste, i.e., having completed at least a first use cycle (or life cycle) and having already served their first purpose.

As used herein, "*post-consumer waste*" denotes waste used by consumers such as in private households. For example, the post-consumer waste originates from conventional collecting systems, e.g., as those implemented in the European Union. In contrast, "*industrial waste*" denotes manufacturing scrap, which does not normally reach a consumer. Preferably, the mixed plastic originates from post-consumer waste.

It should be understood that mixed plastic may vary broadly in composition, i.e., it may include polyolefin homopolymers and polyolefin copolymers. Mixed plastic may e.g., be defined based on the presence of contaminants usually not found in virgin polypropylene blends, such as polystyrenes, polyamides, polyesters, wood, paper, limonene, aldehydes, ketones, fatty acids, inorganic elements, organic components, and/or long-term decomposition products of stabilizers. Virgin polypropylene blends denote blends directly originating from the production process without intermediate use. Thus, virgin materials and recycled materials can be easily differentiated based on the absence or presence of contaminants as described above.

Accordingly, as used herein, "*mixed-plasticpolypropylene recycling blend*" denotes a recycling product obtained from mixed plastic and comprising a high content of polypropylene. A "*blend*" denotes a mixture of two or more components, presently polypropylene components. The polypropylene components may be in the form of propylene homopolymers and/or propylene copolymers. Propylene homopolymers generally comprise at least 98 wt.-%, based on the total weight of the propylene homopolymer, of units derived from propylene. Propylene copolymers generally denote polymers comprising at least 50 wt.-%, based on the total weight of the propylene copolymer, of units derived from propylene, and further comprising units derived from other monomers, such as ethylene and/or alpha-olefin units having from 4 to 12 carbon atoms. The mixed-plastic polypropylene recycling blend generally has a broadened molecular weight distribution when compared to virgin polymers because it is a mechanical blend of countless polypropylenes and some amounts of polyethylenes. Since the mixed-plastic polypropylene recycling blend contains material originating from flexible polymer articles, it is usually a blend of polypropylenes and some amounts of polyethylene-based materials (e.g., polyethylene films).

The wording "*flexible polymer articles*" is well known in the art of polymer technology and is contrasted to the wording "*rigid polymer articles*". For example, a distinction may be made based on the thickness of these articles, i.e., typically, flexible polymer articles are objects that are thinner than 120 $\mu$m. The thickness can be measured on a sample of flexible polymer articles by a micrometer gauge. Usually, flexible polymer articles are objects made from thin continuous plastic materials, i.e., plastic films, fibers, and all plastic fabrics (e.g., woven and melt-blown fibers). A flexible polymer article feedstock stream typically comprises objects, wherein at least 70 wt.-% of the objects are flexible polymer articles, i.e., are thinner than 120 $\mu$m.

According to the present invention, the mixed-plastic polypropylene recycling blend has a polypropylene content of at least 92 wt.-%, preferably at least 93 wt.-%, relative to the total weight of the mixed-plastic polypropylene recycling blend and determined by Fourier-transform infrared (FTIR) spectroscopy as described herein below. The polypropylene content may be in the range of from 92 to 99.7 wt.-%, preferably from 93 to 99.5 wt.-%, such as from 93 to 99 wt.-%.

When referred to compositions (such as the mixed-plastic polypropylene recycling blend) and the weight percent of the ingredients comprised therein, it is to be understood that according to the present invention the overall amount of ingredients does not exceed 100 % ($\pm$1 % due to rounding).

If not indicated otherwise, "%" denotes weight percent.

The mixed-plastic polypropylene recycling blend according to the present invention is generally purer than the mixed plastic of its origin waste. However, usually, the mixed-plastic polypropylene recycling blend still contains at least low contents of the contaminants as described above, based on which it can be distinguished from virgin polypropylenes. For example, the mixed-plastic polypropylene recycling blend may be characterized by a limonene content of at least 0.1 ppm (as determined using solid phase microextraction (HS-SPME-GC-MS) by standard addition).

Conventionally the mixed-plastic polypropylene recycling blend according to the present invention may contain one or more of the following components: residual chalk content, residual content of inorganic elements, residual content of paper, residual content of wood, residual content of total free fatty acid, and/or residual content of organic components such as ink binders or tie/barrier layers.

The mixed-plastic polypropylene recycling blend according to the present invention is of high purity and contains only a very small content of contaminants. According to the present invention, the mixed-plastic polypropylene recycling blend has a sum of contents of contaminants selected from polyamide, polystyrene and chalk of less than 1.0 wt.-%, preferably less than 0.9 wt.-%, and more preferably less than 0.8 wt.-%, such as less than 0.5 wt.-%, relative to the total weight of the mixed-plastic polypropylene recycling blend and determined by Fourier-transform infrared (FTIR) spectroscopy as described herein below. The sum of contents of these contaminants may be in the range of from 0 to 1.0 wt.-%, preferably from 0 to 0.9 wt.-%, such as from 0.1 to 0.8 wt.-%.

According to the present invention, the mixed-plastic polypropylene recycling blend has a content of inclusions of a density of at least 1.1 $g/cm^3$ of up to 0.45 vol.-%, preferably up to 0.40 vol.-%, such as in the range of from 0.01 to 0.45 vol.-% (i.e., denoted as "*high + low density inclusions*"). Further, the content of inclusions of a density of at least 1.1 $g/cm^3$ and equal to or lower than 1.53 $g/cm^3$ is in the range of from 0.01 to less than 0.40 vol.-%, preferably from 0.01 to 0.35 vol.-%, (i.e., denoted as "*low density inclusions*"). The contents of inclusions are indicated relative to the total volume of the mixed-plastic polypropylene recycling blend and determined by X-ray Computed Tomography (X-ray CT) as described herein below.

It is assumed that the inclusions identified in the mixed-plastic polypropylene recycling blend by X-ray Computed Tomography (X-ray CT) are indicative of residual contaminants in the mixed-plastic polypropylene recycling blend. Inclusions of a density of higher than 1.53 $g/cm^3$ (i.e., "*high density inclusions*") are considered to be mostly inorganic contaminants. The inorganic contaminants may comprise compounds of calcium, silicon, titanium and aluminum. Example compounds include calcium carbonate and titanium dioxide. These inorganic contaminants may originate, for example, from additives (e.g., filler) added to the original polypropylene composition prior to the manufacture of the original polypropylene flexible packaging. Alternatively or additionally, the inorganic contaminants may originate from, for example, inks applied to or adjacent the original flexible packaging.

Inclusions of a density of at least 1.1 $g/cm^3$ and equal to or lower than 1.53 $g/cm^3$ (i.e., denoted as "*low density inclusions*") are considered to be organic contaminants, such as non-polyolefin polymers. These organic contaminants may comprise, or consist essentially of, polyamide and polyethylene terephthalate (PET). Accordingly, the mixed-plastic polypropylene recycling blend of the present invention has low contents of these residual contaminants.

For the further processing of the mixed-plastic polypropylene recycling blend, it is important that particularly the content of inclusions of larger sizes is relatively low. It has been found that, by reducing the content of such (in particular, large) inclusions, it is possible to provide a mixed-plastic polypropylene recycling blend that is more useful for the manufacture of films or flexible packaging. While overall levels of contamination may be important, it has been found that the particle size and/or particle size distribution of such inclusions can have an influence on the properties of films produced from the mixed-plastic polypropylene recycling blend. Use of filters during the extrusion process as described herein below may help reducing the content of these inclusions.

Preferably, the mixed-plastic polypropylene recycling blend has a content of inclusions of a density of at least 1.1 $g/cm^3$ having inclusion sizes of more than 50 $\mu m$ in diameter of less than 0.25 vol.-%, preferably less than 0.20 vol.-%, and/or inclusion sizes of more than 100 $\mu m$ in diameter of less than 0.15 vol.-%, preferably less than 0.10 vol.-%, relative the total volume of the mixed-plastic polypropylene recycling blend and determined by X-ray Computed Tomography (X-ray CT) as described herein below. For the assessment of the diameter, the longest dimension of each inclusion is considered.

Preferably, the mixed-plastic polypropylene recycling blend has a content of titanium (Ti) of less than 2000 ppm, preferably less than 1800 ppm, even more preferably less than 1600 ppm, such as less than 1500 ppm, relative to the total weight of the mixed-plastic polypropylene recycling blend and determined by X-ray fluorescence (XRF) spectroscopy as described herein below. The content of titanium (Ti) may be in the range of from <LOD to less than 2000 ppm, preferably from <LOD to less than 1800 ppm, even more preferably from <LOD to less than 1600 ppm, such as from 500 to less than 1500 ppm. (<LOD=below limit of detection.)

Preferably, the mixed-plastic polypropylene recycling blend has a sum of contents of contaminants selected from cadmium (Cd), chromium (Cr), mercury (Hg) and lead (Pb) of less than 5 ppm, preferably less than 4 ppm, such as less than 3 ppm, relative to the total weight of the mixed-plastic polypropylene recycling blend and determined by X-ray fluorescence (XRF) spectroscopy as described herein below. The sum of contents of these contaminants may be in the range of from 0 to less than 5 ppm, preferably from 0 to less than 4 ppm, such as from 0 to less than 3 ppm. In some embodiments, the sum of contents of these contaminants is 0, i.e., none of these contaminants is detectable in the mixed-plastic polypropylene recycling blend by X-ray fluorescence (XRF) spectroscopy.

Preferably, the mixed-plastic polypropylene recycling blend has at least one, preferably all, of the following maximum element contents, relative to the total weight of the mixed-plastic polypropylene recycling blend and determined by X-ray fluorescence (XRF) spectroscopy as described herein below:

a) a content of aluminum (Al) of less than 130 ppm, preferably less than 120 ppm, such as in the range of from 50 to less than 130 ppm;

b) a content of calcium (Ca) of less than 1100 ppm, preferably less than 1000 ppm, such as in the range of from 500 to less than 1100 ppm;

c) a content of iron (Fe) of less than 80 ppm, preferably less than 60 ppm, such as in the range of from 10 to less than 80 ppm;

d) a content of sulfur (S) of less than 50 ppm, preferably less than 40 ppm, such as in the range of from 10 to less than 50 ppm;

e) a content of silicon (Si) of less than 480 ppm, preferably less than 460 ppm, such as in the range of from 200 to less than 480 ppm; and

f) a content of zinc (Zn) of less than 50 ppm, preferably less than 40 ppm, such as in the range of from 10 to less than 50 ppm.

Preferably, the mixed-plastic polypropylene recycling blend has a content of phosphorus (P) in the range of from 38 to 160 ppm, such as from 45 to 140 ppm, relative to the total weight of the mixed-plastic polypropylene recycling blend and determined by X-ray fluorescence (XRF) spectroscopy as described herein below.

Preferably, the mixed-plastic polypropylene recycling blend has an ash content of below 1.0 wt.-%, determined by thermogravimetric analysis (TGA) as described herein below. The ash content in the mixed-plastic polypropylene recycling blend may be in the range of from 0.1 to 1.0 wt.-%.

The mixed-plastic polypropylene recycling blend is characterized by good rheological properties. According to the present invention, the mixed-plastic polypropylene recycling blend has a melt flow rate $MFR_2$ in the range of from 3 to 10 g/10 min, preferably from 4 to 9 g/10 min, such as from 5 to 8 g/10 min, determined according to ISO 1133, 230 °C, 2.16 kg.

According to the present invention, the mixed-plastic polypropylene recycling blend has a content of soluble fraction (SF) in the range of from 3.0 to 12.0 wt.-%, preferably from 3.5 to 11.0 wt.-%, more preferably from 4.0 to 10.0 wt.-%, relative to the total weight of the mixed-plastic polypropylene recycling blend and determined by CRYSTEX QC analysis as described herein below.

According to the present invention, the soluble fraction (SF) has an intrinsic viscosity (IV(SF)) of below 1.1 dl/g, preferably below 1.0 dl/g, such as below 0.9 dl/g, determined by CRYSTEX QC analysis as described herein below. The intrinsic viscosity (IV(SF)) may be in the range of from 0.6 to below 1.1 dl/g, such as from 0.7 to below 1.0 dl/g.

Preferably, the mixed-plastic polypropylene recycling blend has a content of the crystalline fraction (CF) of at least 88.0 wt.-%, more preferably at least 90.0 wt.-%, such as at least 93.0 wt.-%, relative to the total weight of the mixed-plastic polypropylene recycling blend and determined by CRYSTEX QC analysis as described herein below. The content of the crystalline fraction (CF) may be in the range of from 88.0 to 97.0 wt.-%, preferably from 89.0 to 96.5 wt.-%.

Preferably, the mixed-plastic polypropylene recycling blend has an ethylene content (C2) of less than 4.5 wt.-%, more preferably less than 4.0 wt.-%, relative to the total weight of the mixed-plastic polypropylene recycling blend and determined by CRYSTEX QC analysis as described herein below. The ethylene content (C2) in the mixed-plastic polypropylene recycling blend may be in the range of from 0.5 to less than 4.5 wt.-%, preferably from 1.0 to less than 4.0 wt.-%.

Preferably, the crystalline fraction (CF) of the mixed-plastic polypropylene recycling blend has an ethylene content (C2(CF)) of less than 5.0 wt.-%, more preferably less than 4.0 wt.-%, such as less than 3.3 wt.-%, relative to the total weight of the crystalline fraction (CF) and determined by CRYSTEX QC analysis as described herein below. The ethylene content (C2) in the crystalline fraction (CF) may be in the range of from 0.5 to less than 5.0 wt.-%, preferably from 1.0 to less than 4.0 wt.-%.

Preferably, the soluble fraction (SF) of the mixed-plastic polypropylene recycling blend has an ethylene content (C2(SF)) of less than 15.0 wt.-%, more preferably less than 13.0 wt.-%, such as less than 10.0 wt.-%, relative to the total weight of the soluble fraction (SF) and determined by CRYSTEX QC analysis as described herein below. The ethylene content (C2) in the soluble fraction (SF) may be in the range of from 5.0 to less than 15.0 wt.-%, preferably from 6.0 to less than 13.0 wt.-%.

In some particular embodiments of the present invention, the mixed-plastic polypropylene recycling blend has

a) an ethylene content (C2) in the mixed-plastic polypropylene recycling blend of less than 4.5 wt.-%, relative to the total weight of the mixed-plastic polypropylene recycling blend;

b) an ethylene content of the soluble fraction (C2(SF)) of less than 15.0 wt.-%, relative to the total weight of the soluble fraction (SF); and

c) an ethylene content of the crystalline fraction (C2(CF)) of less than 3.3 wt.-%, relative to the total weight of the crystalline fraction (CF), wherein the content of the crystalline fraction (CF) in the mixed-plastic polypropylene recycling blend is at least 88.0 wt.-%, preferably at least 93.0 wt.-%, relative to the total weight of the mixed-plastic polypropylene recycling blend.

The mixed-plastic polypropylene recycling blend has very advantageous mechanical properties. According to the invention, the mixed-plastic polypropylene recycling blend has a flexural modulus in the range of from 1050 to 1350 MPa, preferably from 1070 to 1300 MPa, determined according to ISO 178 (method A, type B specimen).

Preferably, the mixed-plastic polypropylene recycling blend has an Eta(0.05rad/s), 200°C in the range of from 3000 to 4500 Pa.s, more preferably from 3500 to 4400 Pa.s.

Preferably, the mixed-plastic polypropylene recycling blend has an Eta(300rad/s), 200°C in the range of from 250 to 350 Pa.s, more preferably from 280 to 330 Pa.s.

Preferably, the mixed-plastic polypropylene recycling blend has a Shear Thinning Factor (STF), Eta(0.05)/Eta(300), in the range of from 9.5 to 16.0, more preferably from 10.0 to 15.0.

The Eta values are determined as described herein below.

In some particular embodiments of the present invention, the mixed-plastic polypropylene recycling blend has

a) an Eta(0.05rad/s), 200°C in the range of from 3000 to 4500 Pa.s,

b) an Eta(300rad/s), 200°C in the range of from 250 to 350 Pa.s, and

c) a Shear Thinning Factor (STF), Eta(0.05)/Eta(300), in the range of from 9.5 to 16.0.

In some preferred embodiments of the present invention, the mixed-plastic polypropylene recycling blend is an extruded, such as melt-extruded, material. Preferably, the melt-extruded mixed-plastic polypropylene recycling blend is present in the form of pellets.

The mixed-plastic polypropylene recycling blend, particularly as melt-extruded material, may comprise additives (Ad), e.g., selected from additives known in the art, preferably selected from the group consisting of antioxidants, stabilizers, fillers, colorants, nucleating agents, antistatic agents, and mixtures thereof. Such additives are generally commercially available and are described, for example, in "Plastic Additives Handbook", pages 871 to 873, 5th edition, 2001 of Hans Zweifel. Generally, additives are contained in a polymer blend in a content of up to 5 wt.-%, relative to the total weight of the polymer.

*Preparation of the mixed-plastic polypropylene recycling blend*

The mixed-plastic polypropylene recycling blend is characterized by the beneficial properties as described above, in particular high purity. These beneficial properties are obtained by the preparation of the mixed-plastic polypropylene recycling blend by a mechanical recycling process comprising the following steps:

a) providing a precursor mixed-plastic recycling stream (A), wherein the precursor mixed-plastic recycling stream (A) comprises at least 70 wt.-% of flexible polymer articles, relative to the total weight of the precursor mixed-plastic recycling stream (A);

b) separating the precursor mixed-plastic recycling stream (A) according to size to prepare a separated mixed-plastic recycling stream (B) having only articles with a longest dimension in the range of from 30 to 400 mm;

c) removing metal particles from the separated mixed-plastic recycling stream (B) to prepare a purer separated mixed-plastic recycling stream (C);

d) sorting the purer separated mixed-plastic recycling stream (C), preferably by means of one or more optical sorters, according to polymer type and transparency, and optionally also according to color and/or reflectance, and selecting a polypropylene-rich stream of high transparency, thereby generating a sorted polypropylene recycling stream (D);

wherein steps c) and d) can be in any order, and if step c) is subsequent to step d), the sorted polypropylene recycling stream (D) is obtained after step c);

e) optionally, conducting a quality-control (1) step to determine the quality of the sorted polypropylene recycling stream (D), based on the following parameters:

 e1) the content of flexible polyethylene articles,

 e2) the content of flexible multi-material multi-layer articles,

 e3) the content of transparent flexible polypropylene articles,

 e4) the content of metallized flexible polypropylene articles,

 e5) the content of colored flexible polypropylene articles, and

 e6) optionally the content of flexible polypropylene articles,

 and allowing the sorted polypropylene recycling stream (D) to proceed to step f) if pre-determined conditions for these parameters are fulfilled, thereby generating a quality-controlled (1) polypropylene recycling stream (E1);

 otherwise, if the pre-determined conditions are not fulfilled:

  resending the sorted polypropylene recycling stream (D) to step c) or d), and reconducting steps c) and/or d) and optionally step e) on the sorted polypropylene recycling stream (D), thereby generating a quality-controlled (1) polypropylene recycling stream (E2); or
  combining the sorted polypropylene recycling stream (D) with a polypropylene recycling stream (X) that fulfills the pre-determined conditions, thereby generating a quality-controlled (1) polypropylene recycling stream (E3);

f) size-reducing the quality-controlled (1) polypropylene recycling stream (E), being stream (E1) and/or (E2) and/or (E3), or the sorted polypropylene recycling stream (D), preferably in the presence of water or an aqueous solution, to form a flaked polypropylene recycling stream (F);

g) washing the flaked polypropylene recycling stream (F) with an aqueous washing solution, removing the aqueous washing solution and optionally any material not floating on the surface of the aqueous washing solution, and rinsing with water, to obtain a washed polypropylene recycling stream (G);

h) optionally, drying the washed polypropylene recycling stream (G), thereby obtaining a dried polypropylene recycling stream (H);

i) separating the dried polyolefin recycling stream (H) or the washed polypropylene recycling stream (G) into a light fraction polypropylene recycling stream and a heavy fraction recycling stream, and selecting the light fraction polypropylene recycling stream (I);

j) conducting a quality-control (2) step to determine the quality of the light fraction polypropylene recycling stream (I), based on the following parameters:

 all of parameters j1) to j3):

  j1) the content of transparent flexible polypropylene flakes,

  j2) the content of colored and non-transparent flexible polyethylene flakes, and

  j3) the content of materials other than flexible polypropylene flakes or flexible polyethylene flakes; and/or

 all of parameters j4) to j6):

j4) the content of transparent flexible polypropylene flakes,

j5) the content of polypropylene, and

j6) the content of polyethylene,

and allowing the light fraction polypropylene recycling stream (I) to proceed to step k) if pre-determined conditions for these parameters are fulfilled, thereby generating a quality-controlled (2) polypropylene recycling stream (J1), otherwise, if the pre-determined conditions are not fulfilled, combining the light fraction polypropylene recycling stream (I) with a polypropylene recycling stream (Y) that fulfills the pre-determined conditions, thereby generating a quality-controlled (2) polypropylene recycling stream (J2);

k) melt-extruding, and preferably pelletizing, the quality-controlled (2) polypropylene recycling stream (J), being stream (J1) and/or (J2), preferably wherein additives (Ad) are added in the melt state, to form an extruded, and preferably pelletized, polypropylene recycling product (K); and

l) optionally, aerating, preferably at an air temperature in the range of from 100 to 150 °C, the extruded, and preferably pelletized, polypropylene recycling product (K) to remove volatile organic compounds, thereby generating an aerated extruded, preferably pelletized, polypropylene recycling product (L), and thus providing the mixed-plastic polypropylene recycling blend.

**Step a)** of the process involves the provision of a precursor mixed-plastic recycling stream (A), wherein the precursor mixed-plastic recycling stream (A) comprises at least 70 wt.-% of flexible polymer articles, relative to the total weight of the precursor mixed-plastic recycling stream (A).

A "*precursor mixed-plastic recycling stream (A)*" denotes a stream of mixed plastic, as defined above, comprising plastic objects originating from waste, preferably post-consumer waste, i.e., having completed at least a first use cycle (or life cycle) and having already served their first purpose. Generally, it contains polyolefins and other components, such as polystyrenes, polyamides, polyesters, wood, paper, limonene, aldehydes, ketones, fatty acids, inorganic materials, organic components, and/or long-term decomposition products of stabilizers, in some amounts.

The precursor mixed-plastic recycling stream (A) comprising at least 70 wt.-% of flexible polymer articles may be provided by sorting out from a stream of mixed plastic (e.g., comprising rigid and flexible polymer articles) or from municipal solid waste. The precursor mixed-plastic recycling stream (A) may comprise flexible polypropylene articles and flexible non-polypropylene articles, such as flexible polyethylene articles (e.g., LLDPE- and LDPE-containing articles) in amounts originating from the mixed plastic. For example, the ratio of flexible polypropylene articles to flexible polyethylene articles in the precursor mixed-plastic recycling stream (A) may be from 0.1:1 to 50:1, preferably it is from 0.25:1 to 25:1.

For example, the precursor mixed-plastic recycling stream (A) may comprise a high content (e.g., at least 70 wt.-%) of polypropylene-containing films, such as films used in primary (e.g., food) and secondary packaging applications.

The form, in which the precursor mixed-plastic recycling stream (A) is provided, is not important; however, it is important that the articles present in the precursor mixed-plastic recycling stream (A) are not stuck together during the subsequent steps of the process. If required, a debaling step may be carried out. Methods for debaling are generally known in the art, and include e.g., manual debaling via a crane and debaling via an automatic bale opener (debaler).

**Step b)** of the process involves separating the precursor mixed-plastic recycling stream (A) according to size to prepare a separated mixed-plastic recycling stream (B) having only articles with a longest dimension in the range of from 30 to 400 mm, preferably from 35 to 380 mm and more preferably from 40 to 350 mm.

The person skilled in the art would be aware of multiple ways in which the separating of step b) could be achieved. For example, the separating of step b) is carried out by sieving and/or screening the articles in the precursor mixed-plastic recycling stream (A) for the required sizes.

**Step c)** of the process involves removing metal particles from the separated mixed-plastic recycling stream (B) to prepare a purer separated mixed-plastic recycling stream (C).

Metal particles may be articles or parts thereof contained in the original waste material, and thus often contained in the precursor mixed-plastic recycling stream (A). Removal of metal particles from the separated mixed-plastic recycling stream (B) is important in order to protect the process equipment from destruction by remaining metal particles.

In addition, flexible polymer articles comprising magnetic metallic layers may be removed by this step as well.

The metal particle removal of step c) may be conducted by any means known in the art for metal removal. Usually, magnets and EDDY current separators are employed in these methods. Preferably, an over-belt magnet is used, wherein the separated mixed-plastic recycling stream (B) is passed under an over-blet magnet.

Step c) may be conducted before or after the sorting step d). It is important that this step is performed at least one time in the process, however, it may be performed several times.

**Step d)** of the process involves sorting the purer separated mixed-plastic recycling stream (C), preferably by means of one or more optical sorters, according to polymer type and transparency, and optionally also according to color and/or reflectance, and selecting a polypropylene-rich stream of high transparency, thereby generating a sorted polypropylene recycling stream (D). As described above, steps c) and d) can be conducted in any order. If step c) is subsequent to step d), the sorted polypropylene recycling stream (D) is obtained after step c).

The presence of sorting step d) enables the preparation of high-quality recycled products, regardless of the quality of the feedstock material. It is well known that feedstock materials can greatly vary in quality, with regard to polyolefin content and foreign material contamination, which is largely dependent on the source of the feedstock material (i.e. the source of the precursor mixed-plastic recycling stream (A)).

Generally, it is to be understood that the sorting does not provide streams of articles having 100 % of the characteristic according to which the sorting is carried out. In contrast, the sorting generally occurs for articles predominantly having the required characteristic. The term "*predominantly*" generally means more than 50 % of an article has the required characteristic.

By sorting according to polymer type, the majority of articles that contain polymers other than polypropylene and/or of articles which do not contain any polypropylene (such as paper articles) is removed from the stream, leading to a polypropylene-rich stream. This means that articles predominantly containing polypropylene remain in the stream.

The sorting method according to polymer type is not particularly limited. Preferably, the sorting according to polymer type of step d) is carried out using one or more optical sorters. In the context of the present description, the term "*optical sorter*" denotes a sorting unit that uses any form of electromagnetic (EM)-radiation (visible or non-visible) to differentiate the articles of the purer separated mixed-plastic recycling stream (C).

Suitable methods for sorting the recycling stream according to polymer type include near-IR spectroscopic analysis, mid-IR spectroscopic analysis, high-speed laser spectroscopic analysis, Raman spectroscopic analysis, Fourier-transform infrared (FTIR) spectroscopic analysis. Particularly preferred is near-IR spectroscopic analysis.

Generally, the sorting of step d) can be achieved through simple sorting algorithms, wherein the optical sensor(s) are programmed to assess which articles should be selected or rejected based on simple binary considerations. Alternatively, more complex AI-based systems can be used to achieve a more precise sorting, wherein the optical sorter can recognize certain articles, possibly having certain branding, and from this recognition would know what polymers are contained in said article without having to manually determine the polymer content (e.g., by IR-spectroscopic analysis).

By sorting according to transparency, the majority of non-transparent articles is removed from the stream, leading to a stream of high transparency. This means that predominantly transparent articles remain in the stream.

Generally, "*transparency*" is the quality that an object has when one can see through it. Thus, this wording describes the clearness of an object. Accordingly, transparent articles may be slightly colored or slightly translucent, as long as one can see through them. Regarding the composition of transparent articles, it is assumed that they may contain only small amounts of foreign materials such as metals or other pigments (e.g., titanium oxide, iron oxides, etc.) such that they may be lightly colored or slightly translucent.

Transparency may be defined by the RGBA color model, wherein RGBA stands for red green blue alpha, and alpha is an indicator of transparency. A value of 0 is defined as fully transparent, while a value of 1 stands for fully opaque. Based on the RGBA color model, the wording "*transparent*" denotes an object that has an alpha value of less than 0.3, preferably less than 0.2, such as less than 0.1.

Alternatively, transparency may be defined via clarity, haze and/or luminous transmittance as determined according to ASTM D1003 (based on a cast film test specimen of 50 $\mu$m in thickness). An article of more than 60 % clarity, less than 20 % haze and/or less than 20 % luminous transmittance would be considered a transparent article.

The sorting method according to transparency is not particularly limited. Usually, methods and devices used for color sorting may be used for sorting according to transparency.

Suitable methods for color sorting include optical sorters, such as camera systems (operating in the visible range of the EM-spectrum), visible reflectance spectroscopy, near-IR spectroscopic analysis, mid-IR spectroscopic analysis, and high-speed laser spectroscopic analysis. These methods can be used for the sorting according to transparency of step d).

The sorting according to polymer type and according to transparency may be carried out in any order or concurrently.

After these sorting sub-steps, a polypropylene-rich stream of high transparency is selected for the further process steps.

The sorting step d) may further comprise sorting according to color and/or reflectance. Preferably, the sorting step d) further comprises sorting according to color and reflectance. Purity of the final product can generally be improved with the number of sorting sub-steps. These additional sorting sub-steps allow to reach an article stream with higher transparency. The sorting according to color may remove colored articles, such as e.g., lightly colored transparent articles or predominantly transparent articles containing small amounts of colored parts, labels and coatings etc., if these articles are intended to be removed for improved product quality. The sorting according to reflectance may remove reflecting articles, such as articles comprising a metal layer. A process comprising these sub-steps may provide a product with an even higher purity. Many labels and coatings may be removed by washing; however, in particular metals and inks (especially if contained as layers) may be more complicated to remove.

Preferably, any of these additional sub-steps can be carried out by optical sorters for color sorting as described above. It is preferred that the sorting according to reflectance is carried out by an optical sorter based on infrared-attenuated total reflectance (IR-ATR) spectroscopic analysis and/or camera systems (operating in the visible range of the EM spectrum). The first-mentioned method is a specialized method wherein the surface properties of the piece are determined (typically the data obtained by such a method describes the outermost 2 $\mu$m of a polymer piece, hence the surface properties). The latter-mentioned method can achieve the sorting by any form of recognition algorithm, wherein the optical sensor is programmed to assess which articles should be selected or rejected based on simple binary considerations. Alternatively, more complex AI-based systems can be used to achieve a more precise sorting, in particular when a certain brand of packaging is recognised and the composition of said packaging is known.

**Step e)** of the process involves conducting a quality-control (1) step to determine the quality of the sorted polypropylene recycling stream (D). Step e) is an optional step of the process.

The quality-control (1) step, if present, serves to determine the quality of the sorted polypropylene recycling stream (D), and particularly the efficiency of step d).

The quality of the sorted polypropylene recycling stream (D) is based on the following parameters:

e1) the content of flexible polyethylene articles,

e2) the content of flexible multi-material multi-layer articles,

e3) the content of transparent flexible polypropylene articles,

e4) the content of metallized flexible polypropylene articles,

e5) the content of colored flexible polypropylene articles, and

e6) optionally, the content of flexible polypropylene articles.

If step e) is performed, the sorted polypropylene recycling stream (D) is allowed to proceed to step f) only if pre-determined conditions for these parameters are fulfilled.

Preferably, these pre-determined conditions are:

e1) the content of flexible polyethylene articles is below 5 wt.-%,

e2) the content of flexible multi-material multi-layer articles is below 5 wt.-%,

e3) the content of transparent flexible polypropylene articles is more than 35 wt.-%,

e4) the content of metallized flexible polypropylene articles is below 6 wt.-%,

e5) the content of colored flexible polypropylene articles is below 8 wt.-%, and

e6) optionally, the content of flexible polypropylene articles is at least 80 wt.-%,

all contents being relative to the total weight of the sorted polypropylene recycling stream (D).

Parameters e1) to e6) are evaluated based on the following features:

The wording "*flexible polyethylene articles*" of parameter e1) refers to flexible articles comprising at least 75 wt.-% of polyethylene.

The wording "*flexible multi-material multi-layer articles*" of parameter e2) refers to flexible articles comprising at least two layers of different materials. The different layers may be of non-polypropylene polymers or propylene and non-polypropylene polymers, or mixed polymers, typically they are of non-polypropylene polymers. Metallized materials, even if in the form of multi-layer, do not fall under the wording of parameter e2) as they are already encompassed by parameter e4).

The wording "*transparent flexible polypropylene articles*" of parameter e3) refers to flexible articles comprising at least 75 wt.-% of polypropylene, and wherein at least 90 % of the area of the article (the area being one surface of the flexible article) are transparent, the transparent area having less than 20 % haze (determined according to ASTM D1003, and based on a cast film test specimen of 50 μm in thickness). Flexible articles, wherein only up to 25 % of the area of the article are transparent, are referred to as non-transparent articles. Flexible articles often contain ink (white and/or colored) on their surface that prevents transparency. Thus, flexible articles, wherein between 25 and 90 % of the area of the article are transparent, are referred to as partly colored flexible articles (these articles typically have 10 to 75 % of the area of the article covered by colored ink).

The wording "*metallized flexible polypropylene articles*" of parameter e4) refers to flexible articles comprising at least 75 wt.-% of polypropylene and any metal component in any amount. Usually, the metal components may be in the form of metal layers or metal inks on the flexible polypropylene articles.

The wording "*colored flexible polypropylene articles*" of parameter e5) refers to flexible articles comprising at least 75 wt.-% of polypropylene, and wherein at least 75 % of the area of the article (the area being one surface of the flexible article) are colored, i.e., typically has a colored ink on the surface. Color may be determined based on the RDB system, wherein pure white has each of R, D and B values of 255. Accordingly, a colored material generally has at least one of the R, D and B values of less than 250. Flexible articles, wherein between 10 and 75 % of the area of the article are colored, are referred to as partly colored flexible articles.

Flexible articles, wherein only up to 10 % of the area of the article are colored, are referred to as non-colored articles.

The wording "*flexible polypropylene articles*" of parameter e6) refers to flexible articles comprising at least 75 wt.-% of polypropylene.

Preferably, the quality of the sorted polypropylene recycling stream (D) in step e) (i.e., in each of steps e1) to e6)) is determined by sorting by hand following a visual inspection and/or by optical imaging via near-IR spectroscopic analysis, near-IR/VIS spectroscopic analysis or a camera system operating in the visible range of the EM-spectrum, on a sample from the sorted polypropylene recycling stream (D).

Accordingly, the determination of parameters in the quality-control (1) step may be carried out with the use of an optical detector or without the use of an optical detector by sorting by hand following a visual inspection. Sorting by hand by a skilled person is very reliable and able to identify articles that may not be found by the optical detector. Sorting by hand following a visual inspection operates on the same principles as the use of camera systems in combination with either simple recognition algorithms or more complex AI-based systems, with the latter expected to predominate, as AI recognition improves yet further.

The sorted polypropylene recycling stream (D) is allowed to proceed to step f) if the pre-determined conditions for the above parameters are fulfilled, thereby generating a quality-controlled (1) polypropylene recycling stream (E1).

Otherwise, if the pre-determined conditions are not fulfilled,

1) the sorted polypropylene recycling stream (D) is resent to step c) or d), and steps c) and/or d) and optionally step e) are reconducted on the sorted polypropylene recycling stream (D), thereby generating a quality-controlled (1) polypropylene recycling stream (E2); or
2) the sorted polypropylene recycling stream (D) is combined with a polypropylene recycling stream (X) that fulfills the pre-determined conditions, thereby generating a quality-controlled (1) polypropylene recycling stream (E3).

In option 2), the sorted polypropylene recycling stream (D) is preferably combined with a polypropylene recycling stream (X) in a ratio of the sorted polypropylene recycling stream (D) to the polypropylene recycling stream (X) in the range of from 0.05:1 to 5:1, preferably from 0.1:1 to 2:1, such as from 0.5:1 to 1:1. The ratio will typically depend on the purity of the sorted polypropylene recycling stream (D) and the purity of the polypropylene recycling stream (X), in particular, based on the pre-determined conditions e1) to e5), and optionally e6) as specified above. Preferably, the sorted polypropylene recycling stream (D) is combined with a polypropylene recycling stream (X) in such a ratio that the generated quality-controlled (1) polypropylene recycling stream (E3) fulfills the conditions e1) to e5), and optionally e6), as defined above.

In this way, the quality of the sorted polypropylene recycling stream (D) may be improved.

**Step f)** of the process involves size-reducing the quality-controlled (1) polypropylene recycling stream (E) or the sorted polypropylene recycling stream (D), preferably in the presence of water or an aqueous solution, to form a flaked polypropylene recycling stream (F).

The quality-controlled (1) polypropylene recycling stream (E) may be the quality-controlled (1) polypropylene recycling stream (E1) and/or the quality-controlled (1) polypropylene recycling stream (E2) and/or the quality-controlled (1) polypropylene recycling stream (E3).

The size-reducing step f) may be carried out as a wet process or a dry process by any method known to the person skilled in the art. Suitable methods involve milling and/or grinding, particularly wet-milling and/or wet-grinding, the quality-controlled (1) polypropylene recycling stream (E) or the sorted polypropylene recycling stream (D). An alternative method involves shredding the quality-controlled (1) polypropylene recycling stream (E) or the sorted polypropylene recycling stream (D). It is particularly preferred that the size-reducing step f) is a wet-grinding step.

The size-reducing step f) produces a flaked polypropylene recycling stream (F). The flakes of the flaked polypropylene recycling stream (F) preferably have a surface area in the range of from 50 to 2500 mm$^2$, more preferably from 100 to 1600 mm$^2$ and most preferably from 150 to 900 mm$^2$. In the context of the present description, the flake surface area is defined as the surface area of one of the faces of a flake. This surface area is approximately half of the total surface area of the flake, which has two such faces in addition to a very small amount of surface area coming from the edges of the flake. Accordingly, the total surface area of the flake can range to more than 5000 mm$^2$.

**Step g)** of the process involves washing the flaked polypropylene recycling stream (F) with an aqueous washing solution, removing the aqueous washing solution and optionally any material not floating on the surface of the aqueous washing solution, and rinsing with water, to obtain a washed polypropylene recycling stream (G).

The washing of step g) may comprise one or more washing sub-steps. The nature of the washing sub-step(s) is not limited. However, it is preferred that the one or more washing sub-steps of step g) are continued until the majority of, preferably all, colored areas (such as, e.g., inks) have been removed from the flakes of the flaked polypropylene recycling stream (F).

The primary contaminant in flexible polypropylene articles is ink. Coloration of flexible polypropylene articles is rarely performed via the addition of one or more pigments within the polypropylene-based compositions used to make the flexible polypropylene articles, as would usually be the case for rigid polymer articles, but rather it is performed via the application of ink layers onto the surface of the flexible polypropylene articles. With few exceptions, the polypropylene-based compositions used to produce flexible polypropylene articles are generally either natural (i.e., no pigment present) or white. In the case of white polypropylene compositions, the white appearance is typically the result of cavitation, often related to the presence of calcium carbonate. Cavitation is often combined with white pigments, typically with titanium dioxide. It is intended by the present process to provide a very pure unpigmented recyclate.

It is preferred that at least one of the washing sub-steps of step g) uses alkaline conditions in the aqueous washing solution and is conducted at a temperature in the range of from 40 to 95 °C. If more than one washing sub-step are used in step g), it is preferred to use alkaline conditions in the aqueous washing solution and, independently, a temperature in the range of from 20 to 95 °C in all washing sub-steps, wherein at least one washing sub-step has a temperature in the range of from 40 to 95 °C.

The choice of alkaline conditions in the aqueous washing solution is not particularly limited; however, it is preferred that the aqueous washing solution has a pH in the range of from 8.0 to 14.0, more preferably from 10.0 to 14.0 and most preferably from 12.0 to 14.0.

Preferably, the aqueous washing solution is an aqueous solution of a base selected from the group consisting of calcium hydroxide, potassium hydroxide, magnesium hydroxide, lithium hydroxide, sodium bicarbonate, sodium hydroxide and mixtures thereof. Most preferably, the aqueous washing solution is an aqueous solution of sodium hydroxide.

It is preferred that the amount of the base in the aqueous washing solution is in the range of from 0.05 to 10.00 wt.-%, more preferably from 0.10 to 7.00 wt.-% and most preferably from 0.50 to 5.00 wt.-%, relative to the total weight of the aqueous washing solution.

Aqueous washing solutions, preferably alkaline solutions, suitable for use in the washing sub-step(s) of step g) may comprise a detergent in an amount in the range of from 0.1 wt.-% to 3.0 wt.-%, preferably from 0.1 wt.-% to 1.0 wt.-%, relative to the total weight of the aqueous washing solution.

The detergent may be commercially available detergent mixtures or may be composed in any way known to the person skilled in the art. Suitable detergents include TUBIWASH SKP, TUBIWASH GFN, TUBIWASH EYE and TUBIWASH TOP, commercially available from CHT, KRONES colclean AD 1004, KRONES colclean AD 1002 and KRONES colclean AD 1008 from KIC KRONES, and P3-stabilon WT, P3 stabilon AL from ECOLAB Ltd.

It is further preferred that the washing of step g) involves the application of agitation during the washing sub-step(s), wherein the kind of agitation may be selected from the group consisting of mechanical mixing, ultrasonic treatment, mechanical grinding or pump around loop. Agitation helps to expose the flakes in the recycling stream to fresh washing solution, thus ensuring that the process is not hindered through the buildup of contaminants (e.g., ink) in the immediate vicinity of the flake.

Preferably, the washing sub-step(s) of step g) is/are carried out for a duration in the range of from 5 to 120 min, more preferably from 10 to 60 min and most preferably from 10 to 30 min.

Preferably, at least one washing sub-step of step g) is carried out at a temperature in the range of from 40 to 95 °C, preferably from 55 to 95 °C, more preferably from 60 to 85 °C and most preferably from 60 to 80 °C. The temperature of the washing sub-step(s) may be reached without the input of thermal energy (e.g., if already pre-heated water from another step is used) or may by adjusted by heating the aqueous washing solution.

Preferably, at least one of the washing sub-steps of step g) is carried out with an aqueous washing solution having a pH in the range of from 8.0 to 14.0, and comprising from 0.50 to 5.00 wt.-% of a base, preferably being NaOH, and from 0.1 wt.-% to 1.0 wt.-% of detergent (both contents being relative to the total weight of the aqueous washing solution), at a temperature in the range of from 40 to 95 °C and for a duration in the range of from 5 to 120 min and during agitation.

It is particularly preferred that step g) comprises, in the given order, the following sub-steps if one washing sub-step is applied (preferably under the conditions of the preferred embodiments):

g1) washing the flaked polypropylene recycling stream (F) with an aqueous washing solution at a controlled temperature for a controlled duration, thereby generating a first suspended polypropylene recycling stream (G1);

g2) removing the aqueous washing solution and optionally any material not floating on the surface of the aqueous washing solution, thereby generating a washed polypropylene recycling stream (G2); and

g3) rinsing the washed polypropylene recycling stream (G2) with water, to obtain a rinsed washed polypropylene recycling stream (G3) that is the washed polypropylene recycling stream (G).

Generally, by removing the aqueous washing solution, inks and other contaminants (such as adhesives and/or paper labels) are removed from the recycling stream. In the context of the present description, the wording "*removing the aqueous washing solution*" denotes that at least part of the aqueous washing solution is removed, i.e., it is not required that the aqueous washing solution is removed completely.

Material not floating on the surface of the aqueous washing solution may also be removed with the aqueous washing solution, by a so-called float/sink separation. This material would be any foreign material having a density of greater than 1.00 g/cm$^3$.

Without wishing to be bound by theory, it is believed that the inclusion of a float/sink separation step directly after washing step g) is extremely beneficial for removing as much foreign material as possible. Later steps in the process, such as aerating step I) or drying step h) may result in foreign material that has been detached from the polypropylene flakes but has not been removed to re-adhering to the polypropylene flakes. This can result in contamination of the final recycled product.

By rinsing with water, traces of the aqueous washing solution remaining on the surface of the flakes and therewith any residual contamination (e.g., ink) contained in the aqueous washing solution are intended to be removed. The rinsing sub-step preferably has a duration of less than 5 min.

Particularly preferred, step g) is carried out with the following sub-steps:

g1a) washing the flaked polyolefin recycling stream (F) with a first aqueous washing solution (W1) having a pH in the range of from 8.0 to 14.0, preferably from 10.0 to 14.0, and in particular from 12.0 to 14.0, without the input of thermal energy, thereby generating a first suspended polypropylene recycling stream (G1a);

g2a) removing the first alkaline aqueous washing solution (W1) from the first suspended polyolefin recycling stream (G1a) to obtain a first washed polypropylene recycling stream (G2a);

g1b) washing the first washed polyolefin recycling stream (G2a) with a second aqueous washing solution (W2) having a pH in the range of from 12.0 to 14.0 thereby generating a second suspended polypropylene recycling stream (G1b), wherein sufficient thermal energy is put into the system to raise the temperature to a temperature in the range of from 55 to 95 °C, preferably from 60 to 85 °C, and more preferably from 60 to 80 °C during the washing;

g2b) removing the washing solution (W2) and any material not floating on the surface of the second aqueous washing solution from the second suspended polypropylene recycling stream (G2a) to obtain a second washed polypropylene recycling stream (G2b); and

g3) rinsing the second washed polypropylene recycling stream (G2b) with water to obtain a rinsed second washed polypropylene recycling stream (G3), wherein the rinsed second washed polypropylene recycling stream (G3) corresponds to the washed polyolefin recycling stream (G).

It is preferred that the temperature of the first aqueous washing solution (W1) during sub-step g1a) is less than 70 °C, more preferably less than 60 °C, most preferably less than 50 °C, such as less than 40 °C. For example, washing sub-step g1a) may be carried out at a temperature in the range of from 20 °C to less than 60 °C, preferably from 20 °C to less than 50 °C.

The first and second aqueous washing solutions (W1) and (W2) may comprise a detergent in an amount in the range of from 0.1 wt.-% to 3.0 wt.-%, preferably from 0.1 wt.-% to 1.0 wt.-%, relative to the total weight of the first aqueous washing solution (W1) or (W2), respectively. The detergent may be selected from any of the detergents described above. Sub-steps g1a) and g1b) are preferably carried out during agitation, particularly through ultrasonic treatment, and for a duration of 5 to 120 min.

Without wishing to be bound by theory, it is believed that the inclusion of a float/sink separation step directly after the high temperature washing sub-step g1b) is extremely beneficial for removing as much foreign material as possible.

Following the removal of the second aqueous washing solution (W2), a rinsing sub-step g3) is carried out, as described above.

**Step h)** of the process involves drying the washed polypropylene recycling stream (G), thereby obtaining a dried polypropylene recycling stream (H). Step h) is an optional step of the process, as drying can be carried out during separation step i). However, it is important that the light fraction polypropylene recycling stream (I) obtained after step i) is in a dry state.

If present, the drying step h) can be carried out through thermal drying, mechanical drying or a combination thereof. Suitable forms of mechanical drying include centrifugal drying and a dewatering press (filter or screw-press), each of which allows for the separation of liquids from solids.

**Step i)** of the process involves separating the dried polypropylene recycling stream (H) or the washed polypropylene recycling stream (G) into a light fraction polypropylene recycling stream and a heavy fraction recycling stream, and selecting the light fraction polypropylene recycling stream (I).

The light fraction polypropylene recycling stream (I) predominantly contains flakes of flexible polypropylene articles, while the heavy fraction recycling stream predominantly contains flakes of rigid articles of polypropylene or other polymers. The sorting step d) will further reduce the content of rigid particles in the stream.

The separation step i) can be carried out by any known method in the art for such sorting operations, preferably by any dry-state density separation technique known in the art. Suitable techniques include pneumatic classifying, wind sifters, zig zag cascade and/or air separators.

As would be understood by the person skilled in the art, the separation into a light fraction and a heavy fraction recycling stream by such methods would not solely be influenced by the density of the flakes, but more critically by the aerodynamic properties of the flakes (typically influenced by surface area to weight ratio), e.g., flat labels are separated from the bulkier polymer flakes. The terms "*light fraction*" and "*heavy fraction*" are commonly used in the art and do not strictly refer to classification by density alone. The meaning of these terms in the present description matches these generally understood terms in the art.

**Step j)** of the process involves conducting a quality-control (2) step to determine the quality of the light fraction polypropylene recycling stream (I).

The quality-control (2) step serves to the determine the efficiency of the proceeding process steps on the quality of the light fraction polypropylene recycling stream (I).

The quality of the light fraction polypropylene recycling stream (I) is based on the following parameters:

all of parameters j1) to j3):

j1) the content of transparent flexible polypropylene flakes,

j2) the content of colored and non-transparent flexible polyethylene flakes, and

j3) the content of materials other than flexible polypropylene flakes or flexible polyethylene flakes; and/or

all of parameters j4) to j6):

j4) the content of transparent flexible polypropylene flakes,

j5) the content of polypropylene, and

j6) the content of polyethylene.

The light fraction polypropylene recycling stream (I) is allowed to proceed to step k) only if pre-determined conditions for these parameters are fulfilled.

Preferably, these pre-determined conditions are:

all of conditions j1) to j3):

j1) the content of transparent flexible polypropylene flakes is more than 80 wt.-%,

j2) the content of colored and non-transparent flexible polyethylene flakes is below 2 wt.-%, and

j3) the content of materials other than flexible polypropylene flakes or flexible polyethylene flakes is below 5 wt.-%; and/or

all of conditions j4) to j6):

j4) the content of transparent flexible polypropylene flakes is more than 80 % by number,

j5) the content of polypropylene is more than 92 wt.-%, and

j6) the content of polyethylene is below 6 wt.-%,

the contents in j1) to j3), j5) and j6) being relative to the total weight of the light fraction polypropylene recycling stream (I), and the content in j4) being relative to the total flake number of the light fraction polypropylene recycling stream (I).

Parameters j1) to j6) are evaluated based on the following features:
The wording "*transparent flexible polypropylene flakes*" of parameter j1) refers to flexible (article) flakes comprising at least 75 wt.-% of polypropylene, and wherein at least 90 % of the area of the flake (the area being one surface of the flexible flake) is transparent, i.e., have less than 20 % haze (determined according to ISO 14782:2021, and based on a cast film of 50 μm in thickness). Flexible flakes, wherein only up to 25 % of the area of the flake are transparent, are referred to as non-transparent flakes. Flexible flakes may contain ink on their surface that prevents transparency. Thus, flexible flakes, wherein between 25 and 90 % of the area of the flake are transparent, are referred to as partly colored flakes (these flakes typically have 10 to 75 % of the area of the flake covered by colored ink).

The wording "*colored and non-transparent flexible polyethylene flakes*" of parameter j2) refers to flexible (article) flakes comprising at least 75 wt.-% of polyethylene, wherein only up to 25 % of the area of the flake (the area being one surface of the flexible flake) is transparent, i.e., have less than 20 % haze (determined according to ISO 14782:2021, and based on a cast film of 50 μm in thickness). Flexible flakes, wherein only up to 25 % of the area of the flake are transparent, are referred to as non-transparent flakes. Flexible flakes may contain ink on their surface that prevents transparency. Thus, flexible flakes, wherein between 25 and 90 % of the area of the flake are transparent, are referred to as partly colored flakes. Further, at least 75 % of the area of the flake (the area being one surface of the flexible flake) are colored, i.e., typically has a colored ink on the surface. Color may be determined based on the RDB system, wherein pure white has each of R, D and B values of 255. Accordingly, a colored material generally has at least one of the R, D and B values of less than 250. Flexible flakes, wherein between 10 and 75 % of the area of the flake are colored, are referred to as partly colored flexible flakes. Flexible flakes, wherein only up to 10 % of the area of the article are colored, are referred to as non-colored articles.

The wording "*materials other than flexible polypropylene flakes or flexible polyethylene flakes*" of parameter j3) refers to any materials that are not flexible polypropylene flakes (i.e., flexible (article) flakes comprising at least 75 wt.-% of polypropylene) or flexible polyethylene flakes (i.e., flexible (article) flakes comprising at least 75 wt.-% of polyethylene). These can be flakes or other articles that are not flexible flakes, e.g., rigid flakes, fibers etc., and/or flexible flakes made of other materials.

The wording "*transparent flexible polypropylene flakes*" of parameter j4) is referred to the same articles as described for parameter j1) above. When using a flake analyzer, the content is given in % by number of the flakes.

Typically, parameters j5) and j6) are determined by spectroscopic methods, wherein the total content of polypropylene or polyethylene, respectively, in the sample is obtained.

Preferably, the quality of the light fraction polypropylene recycling stream (I) in step j) is determined by sorting by hand following a visual inspection for parameters j1) to j3), on a sample from the light fraction polypropylene recycling stream (I).

Preferably, the quality of the light fraction polypropylene recycling stream (I) in step j) is determined by optical imaging via near-IR spectroscopic analysis, near-IR/VIS spectroscopic analysis, a camera system operating in the visible range of the EM-spectrum, optionally by the use of a flake analyzer; and/or by Fourier-transform infrared (FTIR) spectroscopic analysis for parameters j4) to j6), on a sample from the light fraction polypropylene recycling stream (I).

More preferably, the content in j4) is determined, optionally by the use of a flake analyzer device, by optical imaging via near-IR spectroscopic analysis, near-IR/VIS spectroscopic analysis and/or a camera system operating in the visible range of the EM-spectrum; and the contents in j5) and j6) are determined, optionally by the use of a flake analyzer device, by near-IR spectroscopic analysis, near-IR/VIS spectroscopic analysis and/or are determined by Fourier-transform infrared (FTIR) spectroscopic analysis, on a sample from the light fraction polypropylene recycling stream (I). The use of a flake analyzer device is particularly preferred as it may combine two or more of the detections methods: near-IR spectroscopic analysis, near-IR/VIS spectroscopic analysis and/or a camera system operating in the visible range of the EM-spectrum.

Accordingly, the determination of parameters in the quality-control (2) step may be carried out with the use of an optical detector or without the use of an optical detector by sorting by hand following a visual inspection. Sorting by hand by a skilled person is very reliable and able to identify articles that may not be found by the optical detector. Sorting by hand following a visual inspection operates on the same principles as the use of camera systems in combination with either simple recognition algorithms or more complex AI-based systems, with the latter expected to predominate, as AI recognition improves yet further.

The light fraction polypropylene recycling stream (I) is allowed to proceed to step k) if the pre-determined conditions for the above parameters are fulfilled, thereby generating a quality-controlled (2) polypropylene recycling stream (J1).

Otherwise, if the pre-determined conditions are not fulfilled, the light fraction polypropylene recycling stream (I) is combined with a polypropylene recycling stream (Y) that fulfills the pre-determined conditions, thereby generating a quality-controlled (2) polypropylene recycling stream (J2).

Preferably, the light fraction polypropylene recycling stream (I) is combined with the polypropylene recycling stream (Y) in a ratio of the light fraction polypropylene recycling stream (I) to the polypropylene recycling stream (Y) in the range of from 0.05:1 to 5:1, preferably from 0.1:1 to 2:1, such as from 0.5:1 to 1:1. The ratio will typically depend from the purity of the light fraction polypropylene recycling stream (I) and the purity of the polypropylene recycling stream (Y), in particular, based on the pre-determined conditions j1) to j3) and/or j4) to j6) as specified above. Preferably, the light fraction polypropylene recycling stream (I) is combined with a polypropylene recycling stream (Y) in such a ratio that the generated quality-controlled (2) polypropylene recycling stream (J2) fulfills the conditions j1) to j3) and/or j4 to j6), as defined above.

In this way, the quality of the light fraction polypropylene recycling stream (I) is improved.

In some embodiments, the determination of the quality of the light fraction polypropylene recycling stream (I) in step j) may be further based on the content of at least one metal, preferably selected from titanium (Ti), calcium (Ca) and aluminum (Al), on a sample from the light fraction polypropylene recycling stream (I), preferably using X-ray fluorescence (XRF) spectroscopy.

**Step k)** of the process involves melt-extruding, and preferably pelletizing, the quality-controlled (2) polypropylene recycling stream (J), preferably wherein additives (Ad) are added in the melt state, to form an extruded, and preferably pelletized, polypropylene recycling product (K). As the subsequent aeration step l) is optional, the extruded, and preferably pelletized, polypropylene recycling product (K) can be the (final) mixed-plastic polypropylene recycling blend.

The quality-controlled (2) polypropylene recycling stream (J) may be the quality-controlled (2) polypropylene recycling stream (J1) and/or the quality-controlled (2) polypropylene recycling stream (J2).

The extrusion of the quality-controlled (2) polypropylene recycling stream (J) in step k) is preferably carried out by a conventional compounding or blending apparatus or an extruder, e.g., a Banbury mixer, a 2-roll rubber mill, a Buss-co-kneader or a twin-screw extruder, such as a co-rotating twin-screw extruder. The extruded polypropylene recycling product (K) recovered from the extrusion apparatus is preferably in the form of pellets, i.e., it is a pelletized polypropylene recycling product (K).

It is preferred that the melt-extrusion of step k) preferably includes a melt-filtration step, wherein larger gels and other particles are reduced in size by filtration. This notably reduces the content of respective inclusions of larger sizes (such as >50 $\mu$m), and improves the quality of the resultant recyclate.

The melt-filtration step may include one or more filtration sub-steps, which may optionally be separated by a degassing and/or vacuumizing sub-steps. Generally, in the filtration sub-step(s), filters may be employed such as in the form of filter plates (preferably continuous laser filter plates). In case of more than one filtration sub-step, the average pore sizes of the filters may be same or different. Preferably, the average pore sizes of the filters decrease with the sequence of the filtration sub-steps. This enables efficient filtration with less contamination and blocking of the filters, as the particles are separated by the filters in the sequence of reduced sizes.

The first filter may comprise a perforated metal plate or drum, and the second filter may comprise a fiber mesh, for example, a metal fiber mesh. The second filter can also be a laser filter, but usually it is a filter with a filter mesh such as a band filter, a screen changer or a belt filter. The first filter may have a mesh size of 70 to 150 $\mu$m, preferably 75 to 130 $\mu$m, more preferably 80 to 110 $\mu$m. The second filter may have a mesh size of 40 to 130 $\mu$m, preferably 45 to 110 $\mu$m, more preferably 50 to 100 $\mu$m. The second filter may have a mesh size smaller than that of the first filter. Perforations in the first filter may be formed by laser (laser filter).

A cascade of filters may be used, for example, a cascade of more than two filters is used, such as three, four or five filters. Where a cascade of two or more filters is used, the second or subsequent filter may have a mesh size that is smaller than the mesh size of the filter that immediately precedes it in the cascade.

The first filter may have perforations that are not uniform in cross-section. For example, the perforations may be frustoconical in cross section, such that each perforation has a minor and major diameter. The second filter may have a mesh size that is smaller than at least the major diameter of the first filter, preferably smaller than both the major and minor diameter of the first filter.

It is preferred that step k) comprises a first filtration sub-step k1), a vacuum degassing sub-step k2) and a second filtration sub-step k3). Preferably in sub-step k1), a filter 1, preferably a continuous laser filter 1, with larger average pore size is used than is present in the filter 2 in sub-step k3). Preferably, the average pore size of the filter 1 is larger by a factor in the range of from 1.5 to 2.5 than the average pore size of the filter 2.

Preferably additives (Ad) are added during step k), preferably in the melt state. These additives may be selected from additives known in the art, as described herein above.

Step **l)** of the process involves aerating, preferably at an air temperature in the range of from 100 to 150 °C, the extruded, and preferably pelletized, polypropylene recycling product (K) to remove volatile organic compounds, thereby generating an aerated extruded, preferably pelletized, polypropylene recycling product (L), and thus providing the mixed-plastic polypropylene recycling blend. Step I) is an optional step of the process.

The aeration step I) may be generally carried out using air, inert gases and/or steam.

The aeration step I) ensures that the content of volatile organic compounds is minimized in the extruded, and preferably pelletized, polypropylene recycling product (K), avoiding any unpleasant odors that are typically associated with similar recycled polymer blends. These volatile organic compounds typically result from contamination of the polymer during the first consumer use, for example through contact with foods, skin care products or other toiletries, or simply through decomposition of the polyolefin and/or the contaminants into volatile oligomeric chains during processing steps.

*Product and use*

The present invention is further directed to an article comprising the mixed-plastic polypropylene recycling blend in any one of the above-described embodiments. The article is preferably an extruded article.

The present invention is further directed to the use of the mixed-plastic polypropylene recycling blend in any one of the above-described embodiments for packaging applications.

**Examples**

Measurement methods

The following definitions of terms and determination methods apply for the above general description of the invention as well as to the below examples, unless otherwise defined.

*a) Melt flow rate*

Melt flow rates were measured with a load of 2.16 kg ($MFR_2$) at 230 °C as indicated. The melt flow rate is that quantity of polymer in grams which the test apparatus standardized to ISO 1133 extrudes within 10 minutes at a temperature of 230 °C under a load of 2.16 kg.

*b) Determination of components of a polymer composition*

*Fourier-transform infrared (FTIR) spectroscopy*

Sample preparation:

All calibration samples and samples to be analyzed were prepared in similar way, on molten pressed plates.

About 2 to 3 g of compounds to be analyzed were melted at 190°C. Subsequently, for 20 seconds, 60 to 80 bar pressure was applied in a hydraulic heating press. Next, the samples were cooled to room temperature in 40 seconds in a cold press under the same pressure, in order to control the morphology of the compound. The thickness of the plates was controlled by metallic calibrated frame plates 2.5 cm by 2.5 cm, 100 to 200 $\mu$m thick (depending MFR from the sample); two plates were produced in parallel at the same time and in the same conditions. The thickness of each plate was measured before any FTIR measurements were performed; all plates were between 100 to 200 $\mu$m thick.

To control the plate surface and to avoid any interference during the measurement, all plates were pressed between two double-sided silicone release papers.

In case of powder samples or heterogeneous compounds, the pressing process was repeated three times to increase homogeneity by pressing and cutting the sample in the same conditions as described before.

Spectrometer:

Standard transmission FTIR spectroscope such as Bruker Vertex 70 FTIR spectrometer was used with the following set-up:

- a spectral range of 4000-400 cm$^{-1}$,
- an aperture of 6 mm,
- a spectral resolution of 2 cm$^{-1}$,
- with 16 background scans, 16 spectrum scans,
- an interferogram zero filling factor of 32

○ Norton Beer strong anodization.

Spectra were recorded and analyzed in Bruker Opus software.

Calibration samples:

As FTIR is a secondary method, several calibration standards were compounded to cover the targeted analysis range, typically from:

○ 0.2 wt% to 2.5 wt% for PA
○ 0.1 wt% to 5 wt% for PS
○ 0.2 wt% to 2.5 wt% for PET
○ 0.1 wt% to 4 wt% for PVC

The following commercial materials were used for the compounds: Borealis HC600TF as iPP, Borealis FB3450 as HDPE and for the targeted polymers such RAMAPET N1S (Indorama Polymer) for PET, Ultramid® B36LN (BASF) for Polyamide 6, Styrolution PS 486N (Ineos) for High Impact Polystyrene (HIPS), and for PVC Inovyn PVC 263B (under powder form).
All compounds were made at small scale in a Haake kneader at a temperature below 265°C and less than 10 minutes to avoid degradation.
Additional antioxidant such as Irgafos 168 (3000 ppm) was added to minimize the degradation.

Calibration:

The FTIR calibration principle was the same for all the components: the intensity of a specific FTIR band divided by the plate thickness is correlated to the amount of component determined by $^1$H or $^{13}$C solution state NMR on the same plate.
Each specific FTIR absorption band was chosen due to its intensity increase with the amount of the component concentration and due to its isolation from the rest of the peaks, whatever the composition of the calibration standard and real samples.
This methodology is described in the publication from Signoret and al. "Alterations of plastic spectra in MIR and the potential impacts on identification towards recycling", Resources, conservation and Recycling journal, 2020, volume 161, article 104980.
The wavelength for each calibration band was:

○ 3300 cm$^{-1}$ for PA,
○ 1601 cm$^{-1}$ for PS,
○ 1410 cm$^{-1}$ for PET,
○ 615 cm$^{-1}$ for PVC,
○ 1167 cm$^{-1}$ for iPP.

For each polymer component i, a linear calibration (based on linearity of Beer-Lambert law) was constructed. A typical linear correlation used for such calibrations is given below:

$$x_i = A_i * \frac{E_i}{d} + B_i$$

where

$x_i$ is the fraction amount of the polymer component i (in wt%),
$E_i$ is the absorbance intensity of the specific band related to the polymer component i (in a.u. absorbance unit, values see above),
d is the thickness of the sample plate,
$A_i$ and $B_i$ are two coefficients of correlation determined for each calibration curve.

No specific isolated band can be found for C2-rich fraction and as a consequence the C2-rich fraction is estimated indirectly,

$$x_{C2\,rich} = 100 - (x_{iPP} + x_{PA} + x_{PS} + x_{PET} + x_{EVA} + x_{PVC} + x_{chalk} + x_{talc})$$

The Chalk and Talc contents are estimated "semi-quantitatively". Hence, this renders the C2 rich content "semi-quantitative".

For each calibration standard, wherever available, the amount of each component was determined by either $^1$H or $^{13}$C solution state NMR, as primary method (except for PA). The NMR measurements were performed on the exact same FTIR plates used for the construction of the FTIR calibration curves.

*Ash content*

Thermogravimetric Analysis (TGA) experiments were performed with a Perkin Elmer TGA 8000. Approximately 15-25 mg of materials were placed in a platinum pan. The temperature was equilibrated at 50°C for 10 minutes, and afterwards raised to 950°C under nitrogen at 20°C/min. The weight loss between ca. 550°C and 700°C (WCO2) was assigned to $CO_2$ evolving from $CaCO_3$, and therefore the chalk content was evaluated as:

$$\text{Chalk content} = 100/44 \times WCO_2$$

Afterwards the temperature was lowered to 300°C at 20°C/min, gas switched to oxygen, and the temperature was raised again to 900°C. The weight loss in this step was assigned to carbon black (Wcb). Knowing the content of carbon black and chalk, the content of inorganic residues excluding chalk and carbon black can be calculated from the ash residue as:

$$\text{Inorganic residues content} = (\text{Ash residue}) - 56/44 \times WCO_2 - Wcb$$

Where Ash residue is the weight% measured at 850°C in the first step conducted under nitrogen.

*Content of Inorganic Elements*

The content of inorganic elements was determined by X-ray fluorescence (XRF). The instrument used for the XRF measurements was a wavelength dispersive Zetium (2,4kW) from Malvern Panalytical. The instrument was calibrated with Adpol, RoHs, Toxel standards from Malvern Panalytical and from a custom set of calibration standards (referred to in the following as "Custom") also from Malvern Panalytical according to the following table:

| Element | range (ppm) |
|---------|-------------|
| Al | 0 - 53.3 |
| Si | 0 - 1970 |
| P | 0 - 103 |
| S | 0 - 281 |
| Ca | 0 - 583 |
| Ti | 0 - 273 |
| Zn | 0 - 576 |

The analyses are done under vacuum on a plaque with a diameter of 40mm and a thickness of 2mm.

The method is generally used to determine the quantitative content of Na, Mg, Al, Si, P, S, Ca, Ti, Zn, Cu, Br, Cl, K, Sr, Fe in polyolefin matrix within defined ranges of these standards.

The content of each precise element was evaluated with the following standards:

| Elements | Range (ppm) | Standard used | LOD (ppm) |
|----------|-------------|---------------|-----------|
| Al | 0 - 53.3 | Custom | 2.5 |
| Ca | 0 - 583 | Custom | 2.8 |
| Fe | | - | |

(continued)

| Elements | Range (ppm) | Standard used | LOD (ppm) |
|---|---|---|---|
| P | 0 - 103 | Custom | 1.3 |
| S | 0 - 281 | Custom | 2.1 |
| Si | 0- 1970 | Custom | 14.4 |
| Ti | 0 - 273 | Custom | 1.5 |
| Zn | 0 - 576 | Custom | 0.7 |

Elements which are not covered by standards, or in case the content is outside of the calibrated standard range, are then analyzed with a semi-quantitative mode (software Omnian from Malvern Panalytical). For elements not covered by the calibration standards, no value is reported if the corresponding peak is not visible and therefore cannot be analyzed with the software Omnian.

The CH content needed to run the semiquantitative evaluation with Omnian was estimated by the software itself.

*Content of Paper and Wood*

Paper and wood amounts were determined by conventional laboratory methods including milling, floatation, microscopy and Thermogravimetric Analysis (TGA).

*Limonene content*

Limonene quantification was carried out using solid phase micro-extraction (HS-SPME-GC-MS) by standard addition.

50 mg ground samples were weighed into 20 mL headspace vials and after the addition of limonene in different concentrations and a glass-coated magnetic stir bar. The vial was closed with a magnetic cap lined with silicone/PTFE. Micro capillaries (10 pL) were used to add diluted limonene standards of known concentrations to the sample. Addition of 0, 2, 20 and 100 ng equals 0 mg/kg, 0.1 mg/kg, 1 mg/kg and 5 mg/kg limonene, in addition standard amounts of 6.6 mg/kg, 11 mg/kg and 16.5 mg/kg limonene were used in combination with some of the samples tested in this application. For quantification, ion 93 acquired in SIM mode was used. Enrichment of the volatile fraction was carried out by headspace solid phase micro-extraction with a 2 cm stable flex 50/30 pm DVB/Carboxen/PDMS fibre at 60 °C for 20 minutes. Desorption was carried out directly in the heated injection port of a GCMS system at 270 °C.

GCMS Parameters:

Column: 30 m HP 5 MS 0.25*0.25
Injector: Splitless with 0.75 mm SPME Liner, 270 °C
Temperature program: -10°C (1 min)
Carrier gas: Helium 5.0, 31 cm/s linear velocity, constant flow
MS: Single quadrupole, direct interface, 280 °C interface temperature
Acquisition: SIM scan mode
Scan parameter: 20-300 amu
SIM Parameter: m/Z 93, 100 ms dwell time

*Total free fatty acid content*

Fatty acid quantification was carried out using headspace solid phase micro extraction (HS-SPME-GC-MS) by standard addition.

50 mg ground samples were weighed in 20 mL headspace vial and after the addition of limonene in different concentrations and a glass-coated magnetic stir bar the vial was closed with a magnetic cap lined with silicone/PTFE. 10 $\mu$L Micro-capillaries were used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode was used for all acids except propanoic acid, here ion 74 was used.

GCMS Parameter:

Column: 20 m ZB Wax plus 0.25*0.25
Injector: Split 5:1 with glass lined split liner, 250 °C
Temperature program: 40°C (1 min) @6 °C/min to 120 °C, @15 °C to 245 °C (5 min)
Carrier: Helium 5.0, 40 cm/s linear velocity, constant flow
MS: Single quadrupole, direct interface, 220°C inter face temperature
Acquisition: SIM scan mode
Scan parameter: 46-250 amu 6.6 scans/s
SIM Parameter: m/z 60,74, 6.6 scans/s

*c) Determination of high and low density inclusions in a polymer composition by X-ray Computed Tomography (X-ray CT)*

X-ray Computed Tomography (CT) was performed using a Thermo Fisher Scientific Heliscan MK2 (Thermo Fisher Scientific) device. Pellets were scanned as delivered and placed in a cylindrical sample holder. The Voxelsize was set to 4 $\mu$m. The X-ray tube was operated with LaB6 filament, voltage was set to 60 kV, focal spot size was set to medium and a pre-filter made of steel with 0.1 mm thickness was used. The specimens were scanned with Space Filling trajectory. For the reconstruction, the values for shift and scale, that are used for converting 32 bit to final 16 bit data, was fixed for all scans to be able to compare multiple data.

Together with the specimens, discs with 5 mm in diameter and 500 $\mu$m in thickness, made of different polymers, were scanned at once. At least a disc made of one PP grade and one PET grade have to be scanned.

The software Avizo for industrial inspection (Thermo Fisher Scientific) was used for data analysis. From the PP and PET discs, the grey values were determined acting as guide for thresholding. Specimen data was segmented into Polymer and air for the determination of total volume with a threshold which is 72 % lower than that of PP.

Specimen data was segmented with a grey value threshold, which is 11 % higher than that of PET leading to the fraction of high density particulate contaminants. Taking the density of PP with 0.905 g/cm$^3$ and that of PET with 1.38 g/cm$^3$ into account, this threshold corresponds to a density of 1.53 g/cm$^3$.

A second analysis was performed with a lower threshold leading to the fraction of low density particulate contaminants. For this threshold the peak grey value of the pellets was determined. A threshold which was 26 % higher than that of the polymer peak was applied. This usually leads to a density of at least 1.1 g/cm$^3$ (such as of at least 1.14 g/cm$^3$). All inclusions with a grey value higher than that of the first analysis, the high density particulate contaminants, were subtracted from this segmentation.

Each particle was segmented into an individual object using a Connected Component filter. The minimum object size was set to 5 Voxels. For each object, the features average grey value, position, volume, length, width and thickness were determined.

*d) Flexural modulus*

The flexural modulus was determined according to ISO 178 method A (3-point bending test) on 80 mm x 10 mm x 4 mm specimens (type B). Following the standard, a test speed of 2 mm/min and a span length of 16 times the thickness was used. The testing temperature was 23$\pm$2 °C. Injection molding was carried out according to ISO 19069-2.

*e) Crystex analysis, crystalline fraction (CF) and soluble fraction (SF)*

The crystalline (CF) and soluble fractions (SF) of the PCR polypropylene resins as well as the ethylene contents and intrinsic viscosities of the respective fractions were analyzed by use of the CRYSTEX instrument, Polymer Char (Valencia, Spain) in line with ISO16152-2022 - Method 2. Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands (CH$_3$

stretching vibration (centered at app. 2960 cm$^{-1}$) and the CH stretching vibration (2700-3000 cm$^{-1}$) that are serving for the determination of the concentration and the ethylene content in ethylene-propylene copolymers. The IR4 detector is calibrated with series of 8 EP copolymers with known ethylene content in the range of 2 wt% to 69 wt% (determined by $^{13}$C-NMR) and each at various concentrations, in the range of 2 and 13 mg/ml. To encounter for both features, concentration and ethylene content at the same time for various polymer concentrations expected during Crystex analyses the following calibration equations were applied:

$$Conc = a + b*Abs(CH) + c*(Abs(CH))^2 + d*Abs(CH_3) + e*(Abs(CH_3)^2 + f*Abs(CH)*Abs(CH_3)$$

$$(equation\ 1)$$

$$CH^3/1000C = a + b*Abs(CH)^3 + d*Abs(CH_3) + e*(Abs(CH_3)/Abs(CH_2)) \qquad (equation\ 2)$$

The constants a to e for equation 1 and a to f for equation 2 were determined by using least square regression analysis.

The CH$_3$/1000C is converted to the ethylene content in wt% using following relationship:

$$wt\%\ (ethylene\ in\ EP\ copolymers) = 100 - CH_3/1000TC * 0.3$$

Intrinsic viscosity (IV) of the PCR polypropylene resin and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$IV\ (dL/g) = a* Vsp/c$$

The samples to be analyzed are weighed out in concentrations of 10 mg/ml to 20 mg/ml. To avoid injecting possible gels and/or polymers which do not dissolve in TCB at 160 °C, like PET and PA, the weighed out sample was packed into a stainless steel mesh MW 0,077/D 0.05 mm.

After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400 rpm. To avoid sample degradation, the polymer solution is blanketed with the N$_2$ atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV [dl/g] and the C2 [wt%] of the PP composition. During the second injection the soluble fraction (at low temperature) and the crystalline fraction (at high temperature) with the crystallization cycle are measured (wt% SF, wt% CF, wt% C2, wt% C2(SF), wt% C2(CF), IV(SF), IV(CF)), where the wt% CF is calculated in the following way:

$$wt\%\ CF = 100 - wt\%\ SF.$$

*f) Dynamic Shear Measurements (Eta(2.7kPa) and Eta(300radls))*

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression-molded plates, using nitrogen atmosphere and setting a strain within the linear viscoelastic regime. The oscillatory shear tests were done at 200°C applying a frequency range between 628 and 0.01 rad/s, with data evaluation of 5 datapoints per decade and a logarithmic ramped strain of 2-7% that is used. The plate-plate geometry has a diameter of 25 mm and a gap size of 1.3 mm is used. The trimming is carried out at 1.4 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where

$\sigma_0$ and $\gamma_0$ are the stress and strain amplitudes, respectively

$\omega$ frequency is the angular

$\delta$ is the phase shift (loss angle between applied strain and stress response)

t is the time

Dynamic test results are typically expressed by means of several different rheological functions, namely the shear storage modulus G', the shear loss modulus G", the complex shear modulus G*, the complex shear viscosity η*, the dynamic shear viscosity η', the out-of-phase component of the complex shear viscosity η" and the loss tangent tan δ which can be expressed as follows:

$$G' = \frac{\sigma_0}{\gamma_0}\cos\delta \;\; [\text{Pa}] \qquad (3)$$

$$G'' = \frac{\sigma_o}{\gamma_o}\sin\delta \;\; [\text{Pa}] \qquad (4)$$

$$G^* = G' + iG'' \;[\text{Pa}] \qquad (5)$$

$$\eta^* = \eta' - i\eta'' \;[\text{Pa.s}] \qquad (6)$$

$$\eta' = \frac{G''}{\omega} \;[\text{Pa.s}] \qquad (7)$$

$$\eta'' = \frac{G'}{\omega} \;[\text{Pa.s}] \qquad (8)$$

ETA(x kPa) is determined according with equation 9.

$$ETA(x\;kPa) = Eta^* \;\; for \;(G^* = x\;kPa) \;[\text{Pa.s}] \qquad (9)$$

For example, the ETA(2.7 kPa) is the defined by the value of the complex viscosity, determined for a value of complex modulus equal to 2.7 kPa.
Eta (x rad/s) is determined according with equation 10.

$$ETA(x\;rad/s) = Eta^* \;\; for \;(\omega = x\;rad/s) \;[\text{Pa.s}] \qquad (10)$$

For example, the ETA(300 rad/s) is defined by the value of the complex viscosity, determined at a frequency sweep of 300 rad/s.
Equally, the ETA(0.05 rad/s) is defined by the value of the complex viscosity, determined at a frequency sweep of 0.05 rad/s.*g) Shear Thinning Factor (STF)*

$$STF = \frac{Eta^* \; for \; (\omega=0.05 \; rad/s)}{Eta^* \; for \; (\omega=300 \; rad/s)} \qquad (11)$$

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "- Interpolate y-values to x-values from parameter" and the "logarithmic interpolation type" were applied.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.

Experimental

Inventive Examples IE1 and IE2 were prepared by the above-outlined recycling process, wherein both quality control steps (1) and (2) were used for IE1, and only quality control (2) step was used for IE2.

For IE2, German post-consumer plastic trash fulfilling the specification DSD323-2 was used as precursor mixed-plastic recycling stream (A). For IE1, a German post-consumer plastic trash that was enriched in post-consumer flexible polypropylene articles was used as precursor mixed-plastic recycling stream (A). The content of flexible polymer articles in IE1 was 81.4 wt.-% (with a PP:PE ratio of 23.8:1) and in IE2 was 71.1 wt.-% (with a PP:PE ratio of 0.3:1).

The process was conducted by the sequence of steps: a) providing the precursor mixed-plastic recycling stream (A) described above; b) separating via sieving; c) removing metal particles; d) sorting according to polymer type, transparency, color and reflectance via optical sorters; e) quality control step (1) for IE1 (based on parameters e1) to e6), as indicated in Table 2); f) size-reducing via wet grinding; g) washing by cold alkaline wash, hot alkaline wash and rinsing (sub-steps g1a) to g3)); h) mechanical drying followed by thermal drying; i) separating via air sifter; j) quality-control step (2) (based on parameters j1) to j6), as indicated in Table 2); k) extrusion under the conditions identified in Table 1 in the presence of 0.3 wt.-% of antioxidants and obtained as pellets; and aerating at 120 °C for 22 h.

**Table 1:** Extrusion conditions.

| | |
|---|---|
| Screw speed (rpm) | 230 |
| Torque (%) | 60-70 |
| Throughput (kg/h) | 290-320 |
| Temperature at PCU (°C) | 120 |
| Temperature profile extruder (°C) | 210-225 |
| Temperature Laser Filter (°C) Filter fineness Laser Filter ($\mu$m) | 245 90/110 |
| Filter fineness screen changer ($\mu$m) | 50 |

CE1 and CE2 were prepared by the mechanical polyolefin recycling process according to WO 2023/209075 A1 comprising a quality-control step based on the analysis of the ethylene-propylene rubber (EPR) fraction of the soluble fraction. For CE1, a Swedish post-consumer plastic trash enriched in post-consumer flexible PP articles was used as precursor mixed-plastic recycling stream (A). For CE2, German post-consumer plastic trash fulfilling the specification DSD323-2 was used as precursor mixed-plastic recycling stream (A).

For CE3, the post-consumer plastic trash fulfilling the German specification DSD323-2 was used as precursor mixed-plastic recycling stream (A) and prepared as described in WO 2023/209075 A1, however, without the quality-control step based on the EPR content.

Accordingly, CE1 to CE3 were prepared by an analogous recycling process - however either without any quality control step (CE3) or with a quality control step based on the EPR content (CE1 and CE2).

*Quality control steps*

The results of the quality control steps for the Inventive Examples IE1 and IE2 are summarized in Table 2 below:

**Table 2:** Results of the quality control steps.

| Composition (wt.-%) | IE2 | IE1 |
|---|---|---|
| **Quality control step (1)** via hand sorting | | |
| PP flexibles | No quality control (1) | 82 |
| Transparent PP flexibles | | 40 |
| Partly-colored PP flexibles | | 30 |
| Colored PP flexibles | | 7 |
| Metallized PP flexibles | | 5 |
| PE flexibles | | 3 |
| Organic materials (PS, PVC, PET, etc.) | | 10 |
| Paper | | - |
| MMML flexibles | | 4 |
| Rest | | 3 |
| **Quality control step (2)** via hand sorting | | |
| PP flexibles | 94 | 96 |
| Transparent PP flexibles | 84 | 87 |
| Colored and partly-colored PP flexibles | 8 | 7 |
| White PP flexibles | 2 | 2 |
| Fibers | 3 | 1.5 |
| PE flexibles (colored/non-transparent) | 1.3 | 1.5 |
| Rigids (PO) and other polymers (PS, PVC, PET, PU, foams etc.) | 1.4 | 1 |
| Paper | - | - |
| Metallized PP flexibles | - | - |
| Rest | 0.3 | - |
| **Quality control step (2)** | | |
| PP (IR) | 94 | 94.2 |
| Transparent PP flexibles* (flake analyzer) | n.m. | 88.8 |
| Organic materials (IR) (PS, PET, barrier layers, etc.) | 0.1 | 0.2 |
| PE (IR) | 4.7 | 5 |
| Ti (XRF) | 1130 | 1079 |
| Ca (XRF) | 948 | 536 |
| Al (XRF) | 124 | 110 |
| * The values for transparent PP flexibles in the quality control step (2) are indicated as % by number (measured via flake analyzer as described below); all other values are indicated as wt.-%. MMML = multi-material multi-layer articles n.m. = not measured | | |

*Measurement of transparent flexible polypropylene flakes via flake analyzer*

This measurement was done to validate the results (number%) obtained by the flake analyzer.

The number-% of transparent flexible PP flakes in Inventive Example IE1 was determined with a flake analyzer under the following conditions:

Flake Analyzer 2.0 by RTT; the instrument processes samples of up to 8 kg of flakes of 2-30 mm at a throughput of about 250 g/min. The instrument is equipped with a laser, a color camera and NIR camera.

An analytical balance by Sartorius AG Germany was used, with a load max. of 620 g and min. of 0.02 g; with d, representing the standard division size, of 0.001 in the range of 0-120 g; and e, the stated accuracy or certified reliability, is 0.01g.

A sample of ca. 35 g flakes was sorted by hand separating the transparent flexible PP flakes from the rest. Transparent flexible PP flakes were collected and the fractions were individually analyzed by the flake analyzer, resulting in a total number of flakes and a number of transparent flexible PP flakes.

**Table 3:** Results of the analysis by flake analyzer.

| Composition | Flake Analyzer | |
|---|---|---|
| | n (number) | % by number |
| **PP transparent** | **5516** | **88.80** |
| Total | 6212 | 100.00 |

The results from the flake analyzer were verified by comparing results via hand sorting (the items of both categories - transparent flexible PP flakes and the rest - were counted per hand). The difference between flake analyzer and hand sorting was around 1 % on the percentage of transparent flakes (88.8 % via flake analyzer versus 90,08 % via hand sorting), indicating a high reliability of the flake analyzer.

*Characteristics of the polymer blends*

The prepared polymer blends were analyzed for their contents and properties. The obtained results are depicted in Tables 4 to 7 below.

**Table 4:** Properties of the polymer blend.

| | CE1 | CE2 | CE3 | IE2 | IE1 |
|---|---|---|---|---|---|
| Polypropylene - PP (IR) | 91.8 | 94.5 | 87.3 | 94.3 | 95.5 |
| Polyamide - PA (IR), wt.-% | 0.2 | 0.2 | 0.3 | 0.1 | 0.1 |
| Polystyrene - PS (IR), wt.-% | 0.7 | - | 0.2 | 0.1 | <LOD |
| Chalk (IR), wt.-% | 0.2 | 0.2 | 0.3 | 0.1 | 0.1 |
| Ash content (TGA), wt.-% | 0.75 | 0.63 | 1.20 | 0.61 | 0.51 |
| PE (IR) | 6 | 4 | 11 | 5 | 4 |
| C2 total (Crystex), wt.-% | 4.7 | 5.24 | n.m. | 3.2 | 3.05 |
| C2(CF) (Crystex) wt.-% | 3.31 | 4.45 | n.m. | 3.18 | 2.66 |
| C2(SF) (Crystex), wt.-% | 15.79 | 16.13 | n.m. | 9.07 | 9.03 |
| IV(CF) (Crystex), dL/g | 1.92 | 1.88 | n.m. | 2.03 | 2.04 |
| IV(SF) (Crystex), dL/g | 1.33 | 1.27 | n.m. | 0.86 | 0.86 |
| soluble fraction (SF) (Crystex), wt.-% | 7.23 | 7.77 | n.m. | 6.14 | 6.34 |
| crystalline fraction (CF) (Crystex), wt.-% | 92.77 | 92.23 | n.m. | 93.86 | 93.66 |
| n.m. = not measured | | | | | |

As depicted in Table 4, it is remarkable that the polymer blends of the Inventive Examples IE1 and IE2 are characterized by a lower content of non-polyolefin polymeric compounds and inorganic compounds as compared to the Comparative Examples CE1 to CE3. The intrinsic viscosity in the soluble fraction of the polymer blend was also reduced in the Inventive Examples versus the Comparative Examples.

**Table 5:** Metal content of the polymer blend.

| Metal content (XRF, ppm) | CE1 | CE2 | CE3 | IE1 | IE2 |
|---|---|---|---|---|---|
| Heavy metals (sum of Cd, Cr, Hg, Pb) | 0 | 0 | 8 | 0 | 0 |
| Al | 287 | 130 | 195 | 91 | 112 |
| Ca | 1151 | 1109 | 2081 | 730 | 945 |
| Fe | 60 | 48 | 111 | 41 | 57 |
| P | 127 | 132 | 52 | 82 | 84 |
| S | 41 | 35 | 51 | 27 | 36 |
| Si | 496 | 358 | 498 | 341 | 439 |
| Ti | 2248 | 1944 | 4609 | 1038 | 1393 |
| Zn | 34 | 24 | 58 | 30 | 35 |

Table 5 further shows that the metal content was very low in Examples IE1, IE2, CE1 and CE2. In particular, significant reduction of the content of titanium (Ti), aluminum (Al) and calcium (Ca) was observed for the Inventive Examples versus each of the Comparative Examples.

**Table 6:** Inclusions in the polymer blend.

| Inclusions (X-ray CT, vol.-%) | CE1 | IE1 | IE2 |
|---|---|---|---|
| High density (total) | 0.09 | 0.05 | 0.08 |
| High density >50$\mu$m | 0.05 | 0.02 | 0.04 |
| High density >100$\mu$m | 0.03 | 0.01 | 0.02 |
| Low density (total) | 0.40 | 0.18 | 0.26 |
| Low density >50$\mu$m | 0.24 | 0.08 | 0.12 |
| Low density >100$\mu$m v% | 0.13 | 0.04 | 0.07 |
| High + low density (total) | 0.48 | 0.23 | 0.34 |
| High + Low density >50$\mu$m | 0.29 | 0.10 | 0.16 |
| High + Low density >100$\mu$m | 0.15 | 0.05 | 0.09 |

According to Table 6, the inclusions observed in the polymer blends by X-ray CT were reduced in both Inventive Examples versus the Comparative Example CE1.

**Table 7:** Physical properties of the polymer blend.

| | CE1 | CE2 | CE3 | IE2 | IE1 |
|---|---|---|---|---|---|
| MFR 230°C/2.16kg, g/10 min | 8.15 | 10 | 6.92 | 7.36 | 7.1 |
| Flexural Modulus ISO 178/ specimen type B, MPa | 1166 ± 10 | 1133 ± 7 | 1114 ± 9 | 1144 ± 13 | 1167 ± 13 |
| Eta(0.05rad/s), 200°C, Pa.s. | 3812 | 3160 | 4326 | 4311 | 4056 |
| Eta(300rad/s), 200°C, Pa.s. | 268 | 255 | 284 | 302 | 296 |
| Shear Thinning Factor (STF), Eta(0.05)/Eta(300) | 14.2 | 12.4 | 15.2 | 14.3 | 13.7 |

According to Table 7, many of the physical properties were in the same range.

Finally, it is remarkable that the results obtained for the two Inventive Examples were comparable, regardless the fact that in IE1 a precursor mixed-plastic recycling stream (A) was used that was already enriched in post-consumer flexible polypropylene articles. This supports the efficiency of the process in contaminant removal and its applicability for a variety of post-consumer waste products.

**Claims**

1. A mixed-plastic polypropylene recycling blend having

    i) a polypropylene content of at least 92 wt.-%, relative to the total weight of the mixed-plastic polypropylene recycling blend and determined by Fourier-transform infrared (FTIR) spectroscopy as described in the specification;
    ii) a melt flow rate $MFR_2$ in the range of from 3 to 10 g/10 min, determined according to ISO 1133, 230 °C, 2.16 kg;
    iii) a content of inclusions of a density of at least 1.1 $g/cm^3$ of up to 0.45 vol.-%, wherein the content of inclusions of a density of at least 1.1 $g/cm^3$ and equal to or lower than 1.53 $g/cm^3$ is in the range of from 0.01 to less than 0.40 vol.-%, the contents of inclusions being indicated relative to the total volume of the mixed-plastic polypropylene recycling blend and determined by X-ray Computed Tomography (X-ray CT) as described in the specification;
    iv) a flexural modulus in the range of from 1050 to 1350 MPa, determined as described in the specification;
    v) a sum of contents of contaminants selected from polyamide, polystyrene and chalk of less than 1.0 wt.-%, relative to the total weight of the mixed-plastic polypropylene recycling blend and determined by Fourier-transform infrared (FTIR) spectroscopy as described in the specification; and
    vi) a content of soluble fraction (SF) in the range of from 3.0 to 12.0 wt.-%, relative to the total weight of the mixed-plastic polypropylene recycling blend, wherein the soluble fraction (SF) has an intrinsic viscosity (IV(SF)) of below 1.1 dl/g, the content of the soluble fraction (SF) and the intrinsic viscosity (IV(SF)) being determined by CRYSTEX QC analysis as described in the specification.

2. The mixed-plastic polypropylene recycling blend according to claim 1, wherein the mixed-plastic polypropylene recycling blend has a content of titanium (Ti) of less than 2000 ppm, preferably less than 1800 ppm, relative to the total weight of the mixed-plastic polypropylene recycling blend and determined by X-ray fluorescence (XRF) spectroscopy.

3. The mixed-plastic polypropylene recycling blend according to any one of the preceding claims, wherein the mixed-plastic polypropylene recycling blend has a sum of contents of contaminants selected from cadmium (Cd), chromium (Cr), mercury (Hg) and lead (Pb) of less than 5 ppm, relative to the total weight of the mixed-plastic polypropylene recycling blend and determined by X-ray fluorescence (XRF) spectroscopy.

4. The mixed-plastic polypropylene recycling blend according to any one of the preceding claims having at least one, preferably all, of the following maximum element contents, relative to the total weight of the mixed-plastic polypropylene recycling blend and determined by X-ray fluorescence (XRF) spectroscopy:

    a) a content of aluminum (Al) of less than 130 ppm, preferably less than 120 ppm;
    b) a content of calcium (Ca) of less than 1100 ppm, preferably less than 1000 ppm;
    c) a content of iron (Fe) of less than 80 ppm, preferably less than 60 ppm;
    d) a content of sulfur (S) of less than 50 ppm, preferably less than 40 ppm;
    e) a content of silicon (Si) of less than 480 ppm, preferably less than 460 ppm; and
    f) a content of zinc (Zn) of less than 50 ppm, preferably less than 40 ppm.

5. The mixed-plastic polypropylene recycling blend according to any one of the preceding claims having a content of phosphorus (P) in the range of from 38 to 160 ppm, relative to the total weight of the mixed-plastic polypropylene recycling blend and determined by X-ray fluorescence (XRF) spectroscopy as described in the specification.

6. The mixed-plastic polypropylene recycling blend according to any one of the preceding claims, wherein the content of inclusions of a density of at least 1.1 $g/cm^3$ having inclusion sizes of more than 50 $\mu$m in diameter is less than 0.25 vol.-%, and/or having inclusion sizes of more than 100 $\mu$m in diameter is less than 0.15 vol.-%, relative the total volume of the mixed-plastic polypropylene recycling blend and determined by X-ray Computed Tomography (X-ray CT) as described in the specification.

7. The mixed-plastic polypropylene recycling blend according to any one of the preceding claims having

    a) an Eta(0.05rad/s), 200°C in the range of from 3000 to 4500 Pa.s, preferably from 3500 to 4400 Pa.s; and/or
    b) an Eta(300rad/s), 200°C in the range of from 250 to 350 Pa.s, preferably from 280 to 330 Pa.s.

8. The mixed-plastic polypropylene recycling blend according to any one of the preceding claims having a Shear Thinning Factor (STF), Eta(0.05)/Eta(300), in the range of from 9.5 to 16.0, preferably from 10.0 to 15.0.

9. The mixed-plastic polypropylene recycling blend according to any one of the preceding claims, wherein the content of the soluble fraction (SF) in the mixed-plastic polypropylene recycling blend is in the range of from 4.0 to 10.0 wt.-%, relative to the total weight of the mixed-plastic polypropylene recycling blend.

10. The mixed-plastic polypropylene recycling blend according to any one of the preceding claims, wherein the intrinsic viscosity (IV(SF)) in the soluble fraction (SF) is below 1.0 dl/g.

11. The mixed-plastic polypropylene recycling blend according to any one of the preceding claims having at least one, preferably all, of the following properties, determined by CRYSTEX QC analysis as described in the specification:

   a) an ethylene content (C2) in the mixed-plastic polypropylene recycling blend of less than 4.5 wt.-%, relative to the total weight of the mixed-plastic polypropylene recycling blend;
   b) an ethylene content of the soluble fraction (C2(SF)) of less than 15.0 wt.-%, relative to the total weight of the soluble fraction (SF); and
   c) an ethylene content of the crystalline fraction (C2(CF)) of less than 3.3 wt.-%, relative to the total weight of the crystalline fraction (CF), wherein the content of the crystalline fraction (CF) in the relative to the mixed-plastic polypropylene recycling blend is at least 88.0 wt.-%, preferably at least 93.0 wt.-%, relative to the total weight of the mixed-plastic polypropylene recycling blend.

12. The mixed-plastic polypropylene recycling blend according to any one of the preceding claims, wherein the mixed-plastic polypropylene recycling blend has an ash content of below 1.0 wt.-%, determined by thermogravimetric analysis (TGA) as described in the specification.

13. The mixed-plastic polypropylene recycling blend according to any one of the preceding claims having

   i) a polypropylene content of at least 93 wt.-%, relative to the total weight of the mixed-plastic polypropylene recycling blend and determined by Fourier-transform infrared (FTIR) spectroscopy as described in the specification;
   ii) a melt flow rate $MFR_2$ in the range of from 5 to 10 g/10 min, determined according to ISO 1133, 230 °C, 2.16 kg;
   iii) a content of inclusions of a density of at least 1.1 $g/cm^3$ of up to 0.45 vol.-%, wherein the content of inclusions of a density of at least 1.1 $g/cm^3$ and equal to or lower than 1.53 $g/cm^3$ is in the range of from 0.01 to less than 0.40 vol.-%, the contents of inclusions being indicated relative to the total volume of the mixed-plastic polypropylene recycling blend and determined by X-ray Computed Tomography (X-ray CT) as described in the specification;
   iv) a flexural modulus in the range of from 1050 to 1350 MPa, determined as described in the specification;
   v) a sum of contents of contaminants selected from polyamide, polystyrene and chalk of less than 0.8 wt.-%, relative to the total weight of the mixed-plastic polypropylene recycling blend and determined by Fourier-transform infrared (FTIR) spectroscopy as described in the specification;
   vi) a content of soluble fraction (SF) in the range of from 3.0 to 12.0 wt.-%, relative to the total weight of the mixed-plastic polypropylene recycling blend, wherein the soluble fraction (SF) has an intrinsic viscosity (IV(SF)) of below 1.0 dl/g, the content of the soluble fraction (SF) and the intrinsic viscosity (IV(SF)) being determined by CRYSTEX QC analysis as described in the specification; and
   vii) a content of inclusions of a density of at least 1.1 $g/cm^3$ having inclusion sizes of more than 50 $\mu$m in diameter is less than 0.25 vol.-%, and having inclusion sizes of more than 100 $\mu$m in diameter is less than 0.15 vol.-%, relative the total volume of the mixed-plastic polypropylene recycling blend and determined by X-ray Computed Tomography (X-ray CT) as described in the specification.

14. An article comprising the mixed-plastic polypropylene recycling blend according to any one of the preceding claims, preferably being an extruded article.

15. Use of the mixed-plastic polypropylene recycling blend according to any one of claims 1 to 13 for packaging applications.

Europäisches
Patentamt

European
Patent Office

Office européen
des brevets

## EUROPEAN SEARCH REPORT

Application Number

EP 24 17 3132

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 269 498 A1 (BOREALIS AG [AT]) 1 November 2023 (2023-11-01) * the whole document * | 1-15 | INV. C08L23/10 |
| Y | EP 4 063 452 A1 (BOREALIS AG [AT]) 28 September 2022 (2022-09-28) * the whole document * | 1-15 | |
| Y | WO 2023/217709 A1 (BOREALIS AG [AT]) 16 November 2023 (2023-11-16) * the whole document * | 1-15 | |

TECHNICAL FIELDS
SEARCHED (IPC)

C08K
C08L

The present search report has been drawn up for all claims

| Place of search | Date of completion of the search | Examiner |
|---|---|---|
| Munich | 30 November 2024 | Balmer, J |

EPO FORM 1503 03.82 (P04C01)

## ANNEX TO THE EUROPEAN SEARCH REPORT
## ON EUROPEAN PATENT APPLICATION NO.

EP 24 17 3132

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2024

| Patent document cited in search report | | Publication date | Patent family member(s) | | Publication date |
|---|---|---|---|---|---|
| EP 4269498 | A1 | 01-11-2023 | AU | 2023259646 A1 | 28-11-2024 |
| | | | CN | 119013342 A | 22-11-2024 |
| | | | EP | 4269498 A1 | 01-11-2023 |
| | | | TW | 202402928 A | 16-01-2024 |
| | | | WO | 2023209075 A1 | 02-11-2023 |
| EP 4063452 | A1 | 28-09-2022 | NONE | | |
| WO 2023217709 | A1 | 16-11-2023 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2023118421 A1
- WO 2023180222 A1
- WO 2023209075 A1

### Non-patent literature cited in the description

- **HANS ZWEIFEL**. Plastic Additives Handbook. 2001, 871-873
- **SIGNORET**. Alterations of plastic spectra in MIR and the potential impacts on identification towards recycling. *Resources, conservation and Recycling journal*, 2020, vol. 161
- **LJILJANA JEREMIC** ; **ANDREAS ALBRECHT** ; **MARTINA SANDHOLZER** ; **MARKUS GAHLEITNER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- **HEINO, E.L.** ; **LEHTINEN, A.** ; **TANNER J.** ; **SEPPÄLÄ, J.** Rheological characterization of polyethylene fractions. *Neste Oy, Porvoo, Finland, Theor. Appl. Rheol., Proc. Int. Congr. Rheol*, November 1992, vol. 1, 360-362
- **HEINO, E.L.** The influence of molecular structure on some rheological properties of polyethylene. *Borealis Polymers Oy, Porvoo, Finland, Annual Transactions of the Nordic Rheology Society*, 1995
- Definition of terms relating to the non-ultimate mechanical properties of polymers. *Pure & Appl. Chem.*, 1998, vol. 70 (3), 701-754